(19) Europäisches Patentamt
European Patent Office
Office européen des brevets

(11) **EP 4 583 058 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
**G06T 15/04** (2011.01)

(21) Application number: **24774174.7**

(22) Date of filing: **20.03.2024**

(52) Cooperative Patent Classification (CPC):
**G06T 15/506; G06T 15/20; G06T 17/00;**
**Y02T 10/40**

(86) International application number:
**PCT/CN2024/082808**

(87) International publication number:
**WO 2024/193609 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.03.2023 CN 202310279295**

(71) Applicant: **Tencent Technology (Shenzhen)**
**Company Limited**
**Shenzhen, Guangdong 518057 (CN)**

(72) Inventors:
• **TANG, Zhongliang**
  **Shenzhen, Guangdong 518057 (CN)**
• **XIA, Fei**
  **Shenzhen, Guangdong 518057 (CN)**
• **LING, Fei**
  **Shenzhen, Guangdong 518057 (CN)**
• **DENG, Jun**
  **Shenzhen, Guangdong 518057 (CN)**

(74) Representative: **Nederlandsch Octrooibureau**
**P.O. Box 29720**
**2502 LS The Hague (NL)**

(54) **IMAGE RENDERING METHOD AND APPARATUS, ELECTRONIC DEVICE, STORAGE MEDIUM AND PROGRAM PRODUCT**

(57)    Provided by the present application are an image rendering method and apparatus, an electronic device, a computer-readable storage medium and a computer program product. The method comprises: determining a mask, a reflection image and a camera parameter corresponding to an image to be rendered, the image to be rendered comprising a target object; on the basis of the mask and the camera parameter, constructing a model corresponding to the target object; performing texture mapping on the model on the basis of the reflection image, and obtaining a map of the model; and performing illumination restoration on the model on the basis of the map, and obtaining a target image of the target object.

| | |
|---|---|
| A server determines a mask, a reflection image, and a camera parameter of a to-be-rendered image | 101A |
| Construct a model of the target object based on the mask and the camera parameter | 102A |
| Perform texture mapping on the contour model based on the Albedo image, to obtain a texture map of the contour model | 103A |
| Perform illumination restoration on the model based on the map, to obtain the target image of the target object | 104A |

**FIG. 3A**

## Description

RELATED APPLICATION

This application is based upon and claims priority to Chinese Patent Application No. 202310279295.X, filed on March 20, 2023, which is incorporated herein by reference in its entirety.

FIELD OF THE TECHNOLOGY

The present disclosure relates to image technologies, and in particular, to an image rendering method and apparatus, an electronic device, a storage medium, and a program product.

BACKGROUND OF THE DISCLOSURE

A three-dimensional reconstruction technology includes two types, namely an active type and a passive type. The active type is represented by depth camera, laser scanner, and light-field camera array reconstruction technologies, and the passive type is represented by a conventional image-based photogrammetry technology and inverse neural rendering. In the related art, when an inverse neural rendering technology is used for reconstruction, mostly, a set of neural network parameters needs to be optimized by supervised training to perform three-dimensional reconstruction based on the neural network parameters. However, it takes a longer time to train network parameters, and a corresponding three-dimensional model sensitive to changes in ambient illumination has poor quality and is more sensitive to accuracy of camera poses, which may lead to blurring or noise in texture.

SUMMARY

Embodiments of the present disclosure provide an image rendering method and apparatus, an electronic device, a computer-readable storage medium, and a computer program product, which can improve quality of image rendering.

Technical solutions in embodiments of the present disclosure are implemented as follows:

An embodiment of the present disclosure provides an image rendering method, including:

determining a mask, a reflection image, and a camera parameter of a to-be-rendered image, the to-be-rendered image including a target object;

constructing a model of the target object using the mask and the camera parameter;

mapping the model to the reflection image, to obtain a map of the model; and

performing illumination restoration on the model using the map, to obtain a target image of the target object.

An embodiment of the present disclosure provides an image rendering apparatus, including:

a first processing module configured to determine a mask, a reflection image, and a camera parameter of a to-be-rendered image, the to-be-rendered image including a target object;

a second processing module configured to construct a model of the target object using the mask and the camera parameter;

a third processing module configured to map the model to the reflection image, to obtain a map of the model; and

a fourth processing module configured to perform illumination restoration on the model using the map, to obtain a target image of the target object.

An embodiment of the present disclosure provides an electronic device, including:

a memory configured to store a computer-executable instruction or computer program; and

a processor configured to implement, when executing the computer-executable instruction or computer program stored in the memory, the image rendering method provided in the embodiments of the present disclosure.

An embodiment of the present disclosure provides a computer-readable storage medium, storing a computer-executable instruction or computer program configured for implementing, when executed by a processor, implementing the image rendering method provided in the embodiments of the present disclosure.

An embodiment of the present disclosure provides a computer program product, including a computer program or computer-executable instruction, when the computer program or computer-executable instruction is executed by a processor, the image rendering method provided in the embodiments of the present disclosure being implemented.

The embodiments of the present disclosure have the following beneficial effects:

By use of the embodiments of the present disclosure, after the to-be-rendered image is rendered, the mask, the reflection image, and the camera parameter of the to-be-rendered image are determined; the target object in the to-be-rendered image is modeled based on the mask and the camera parameter, to obtain the model of the target object; the model is mapped based on the reflection image, to obtain the map; and illumination restoration is performed on the model based on the map, to obtain the target image of the target object. In this way, efficiency of image rendering can be improved without training network parameters. In addition, during the rendering, mapping is performed based on the reflection image, to obtain the map, and the target image is obtained by illumination restoration based on the map. Since the reflection image reflects an image part in the to-be-rendered image that can remain unchanged under changing illumination conditions, the characteristic that the target object in the to-be-rendered image remains unchanged under the changing illumination conditions is also retained in the map obtained based on the reflection image. Therefore, the target image obtained by illumination restoration on the map can adapt to more sensitive changes in ambient illumination, thereby improving the quality of image rendering.

BRIEF DESCRIPTION OF THE DRAWINGS

FIG. 1 is a schematic diagram of an architecture of an image rendering system 100 according to an embodiment of the present disclosure.

FIG. 2 is a schematic structural diagram of an electronic device 500 configured for image rendering according to an embodiment of the present disclosure.

FIG. 3A is a schematic flowchart of an image rendering method according to an embodiment of the present disclosure.

FIG. 3B is a schematic flowchart of an image rendering method according to an embodiment of the present disclosure.

FIG. 4A is a schematic flowchart of a method for determining a contour model according to an embodiment of the present disclosure.

FIG. 4B is a schematic flowchart of a method for determining a contour model according to an embodiment of the present disclosure.

FIG. 4C is a schematic diagram of data flow directions of construction of a contour model according to an embodiment of the present disclosure.

FIG. 5A is a schematic diagram of data flow directions of texture mapping according to an embodiment of the present disclosure.

FIG. 5B is a schematic flowchart of a method for texture mapping according to an embodiment of the present disclosure.

FIG. 5C is a schematic diagram of combination of triangular faces according to an embodiment of the present disclosure.

FIG. 6 is a schematic flowchart of a method for determining a target image according to an embodiment of the present disclosure.

FIG. 7 is a schematic flowchart of an image rendering method according to an embodiment of the present disclosure.

FIG. 8 is a schematic diagram of image segmentation according to an embodiment of the present disclosure.

FIG. 9 is a schematic diagram of construction of a white model according to an embodiment of the present disclosure.

FIG. 10 is a schematic flowchart of a method for constructing a white model according to an embodiment of the present disclosure.

FIG. 11 is a schematic diagram of intrinsic image decomposition according to an embodiment of the present disclosure.

FIG. 12 is a schematic diagram of fitting of model materials and ambient illumination according to an embodiment of the present disclosure.

FIG. 13 is a schematic flowchart of fitting of model materials and ambient illumination according to an embodiment of the present disclosure.

FIG. 14 is a schematic diagram of an image rendering result according to an embodiment of the present disclosure.

DESCRIPTION OF EMBODIMENTS

To make the objectives, technical solutions, and advantages of the present disclosure clearer, the following describes the present disclosure in further detail with reference to the accompanying drawings. The described embodiments are not to be considered as a limitation on the present disclosure. All other embodiments obtained by a person of ordinary skill in the art without creative efforts shall fall within the protection scope of the present disclosure.

In the following description, the term "some embodiments" describes subsets of all possible embodiments, but "some embodiments" may be the same subset or different subsets of all the possible embodiments, and may be combined with each other without conflict.

In the following description, the terms "first\second ..." are merely intended to distinguish similar objects and do not represent a specific order for the objects. The terms "first\second ..." may, where permitted, be interchangeable in a particular order or sequence, so that embodiments of the present disclosure described herein may be performed in an order other than that illustrated or described herein.

Unless otherwise defined, meanings of all technical and scientific terms used in the specification are the same as those usually understood by a person skilled in the art to which the present disclosure belongs. Terms used in the specification are merely intended to describe objectives of the embodiments of the present disclosure, but are not intended to limit the present disclosure.

A three-dimensional reconstruction technology includes two types, namely an active type and a passive type. The active type is represented by depth camera, laser scanner, and light-field camera array reconstruction technologies, and the passive type is represented by a conventional image-based photogrammetry technology and inverse neural rendering. In the three-dimensional reconstruction technology based on conventional photogrammetry, a set of two-dimensional color images is generally inputted, and a display set model and a texture material of a target object are outputted. A main process thereof includes the following operations: A camera parameter corresponding to each image in the set of images is calculated first, for each pixel in each frame of image, a three-dimensional spatial position (such as a three-dimensional point cloud) corresponding thereto is then determined, the three-dimensional point cloud corresponding to each frame of image is fused and noise points therein are removed according to various constraints, finally, a geometric model is extracted from the three-dimensional point cloud through a spatial geometric meshing algorithm, and then an Albedo texture map is generated for the geometric model by using a texture mapping technology. The operation may be collectively referred to as geometry and texture reconstruction. However, this manner is sensitive to changes in ambient illumination, an effect is susceptible to interference, a capability of reconstructing weak texture areas is poor, and the generated three-dimensional model is prone to defects, and reconstructed texture maps mostly include only Albedo materials, which is not conducive to achieving a physically based rendering (PBR) effect.

A main process of an inverse neural rendering technology includes the following operations: a camera parameter corresponding to each image in the set of images is calculated first, a set of neural network parameters is optimized by supervised training, and then a geometrical shape and a texture material of the three-dimensional model are represented with neural network parameters. After the training is completed, a corresponding model image may be rendered by inputting camera internal and external parameters at any new view. In this manner, although the inverse neural rendering technology assumes that different observations at a point in a three-dimensional space may be inconsistent due to changes in illumination, views, and occlusion relationships, which, compared with conventional multi-view geometry assumption of consistency of observations at a point in the same three-dimensional space at multi-frame views, is closer to an objective law in the real world, making integrity and robustness of three-dimensional modeling improved in some scenes (such as weak texture scenes), it takes a longer time to train network parameters, and a corresponding three-dimensional model sensitive to changes in ambient illumination has poor quality and is more sensitive to accuracy of camera poses, which may lead to blurring or noise in texture.

To this end, embodiments of the present disclosure provide an image rendering method and apparatus, a device, computer-readable storage medium, and a computer program product to solve at least the above problems. The following describes an exemplary application of an electronic device provided in the embodiments of the present disclosure. The electronic device provided in the embodiments of the present disclosure may be implemented as various types of user terminals such as a laptop computer, a tablet computer, a desktop computer, a set-top box, a mobile device (e.g., a mobile phone, a portable music player, a personal digital assistant, a dedicated messaging device, or a portable gaming device), a smartphone, a smart speaker, a smartwatch, a smart television, and a vehicle-mounted terminal, and may also be implemented as a server. Exemplary applications are described below when the device is implemented as a server.

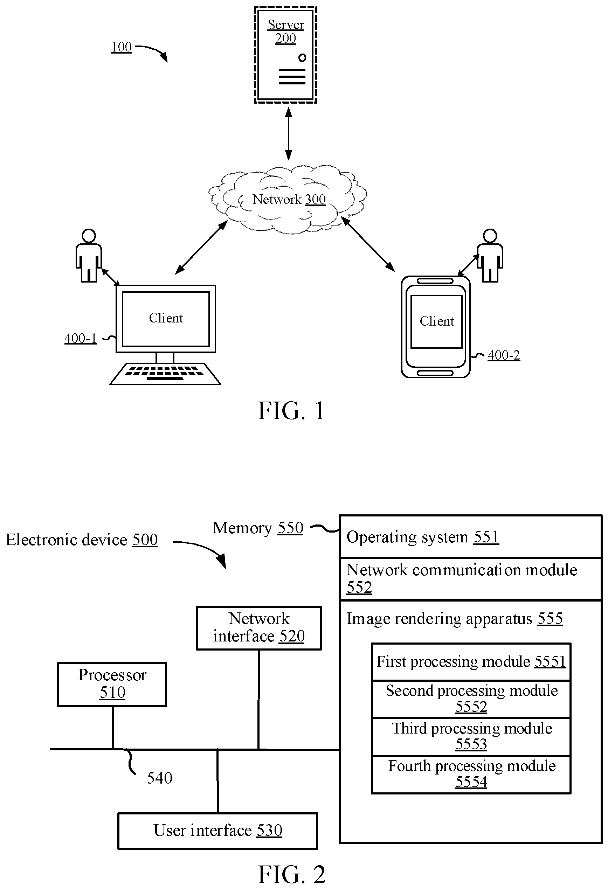

Referring to FIG. 1, FIG. 1 is a schematic diagram of an architecture of an image rendering system 100 according to an embodiment of the present disclosure. To support an exemplary application, a terminal (a terminal 400-1 and a terminal 400-2 are illustrated as examples) is connected to a server 200 by using a network 300. The network 300 may be a wide area network or a local area network, or a combination of the two.

In some embodiments, an image rendering method provided in the embodiments of the present disclosure may be implemented by the terminal or the server 200 alone. When implemented by the terminal alone, the method is installed on the terminal in the form of a client, so that the client on the terminal has a local image rendering function, which may alternatively be used as a plug-in for a related client and be downloaded to the client for local use as needed. In the above deployment manner, the image rendering system can directly complete all detection processes locally without access to an external network, and can ensure absolute data security.

In some embodiments, the image rendering method provided in the embodiments of the present disclosure may be collaboratively implemented by the terminal and the server 200. For example, the terminal transmits, to the server 200, a rendering request for carrying a to-be-rendered image including a target object. The server 200 determines, based on the rendering request, a mask, a reflection image, and a camera parameter that correspond to the to-be-rendered image; constructs a model of the target object based on the mask and the camera parameter; maps the model based on the reflection image, to obtain the map; performs illumination restoration on the model based on the map, to obtain the target image of the target object; and returns the obtained target image to the terminal.

In some embodiments, the embodiments of the present disclosure may alternatively be implemented by using a cloud technology. The cloud technology refers to a hosting technology that unifies a series of resources such as hardware, software, and networks within a wide area network or a local area network to implement calculation, storage, processing, and sharing of data. The cloud technology is a general term for a network technology, an information technology, an integration technology, a management platform technology, an application technology, and the like based on an application of a cloud computing business model, may form a resource pool, and may be used as required, which is flexible and convenient. A cloud computing technology is to be the backbone. A backend service of a technical network system requires a large amount of computing and storage resources.

In some embodiments, the server 200 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400 may be a smartphone, a tablet computer, a laptop computer, a desktop computer, a smart speaker, a smartwatch, or the like, but is not limited thereto. The terminal 400 and the server 200 may be directly or indirectly connected in a wired or wireless communication protocol, which is not limited in the embodiments of the present disclosure.

A structure of an electronic device configured for image rendering according to an embodiment of the present disclosure is described below. Referring to FIG. 2, FIG. 2 is a schematic structural diagram of an electronic device 500 configured for image rendering according to an embodiment of the present disclosure. For example, the electronic device 500 is a server, and the electronic device 500 configured for image rendering shown in FIG. 2 includes: at least one processor 510, a memory 550, at least one network interface 520, and a user interface 530. All components in the electronic device 500 are coupled together by using a bus system 540. The bus system 540 is configured to implement connection and communication between the components. In addition to a data bus, the bus system 540 also includes a power bus, a control bus, and a state signal bus. However, for clarity of description, all types of buses in FIG. 2 are marked as the bus system 540.

The processor 510 may be an integrated circuit chip and has a signal processing capability, for example, a general purpose processor, a digital signal processor (DSP), or another programmable logical device, a discrete gate or a transistor logical device, or a discrete hardware component. The general purpose processor may be a microprocessor, any conventional processor, or the like.

The memory 550 may include a volatile memory or a non-volatile memory, or may include both a volatile memory and a non-volatile memory. The non-volatile memory may be a read only memory (ROM), and the volatile memory may be a random access memory (RAM). The memory 550 described in the embodiments of the present disclosure is intended to include any suitable type of memory. In some embodiments, the memory 550 includes one or more storage devices physically located away from the processor 510.

In some embodiments, the memory 550 can store data to support various operations. Examples of the data include programs, modules, and data structures, or subsets or supersets thereof, as exemplarily described below.

An operating system 551 includes system programs configured for processing various basic system services and performing hardware-related tasks, such as a framework layer, a kernel library layer, and a drive layer, and is configured to implement various basic services and process hardware-based tasks. A network communication module 552 is configured to reach another electronic device through one or more (wired or wireless) network interfaces 520. An example of the network interface 520 includes: Bluetooth, wireless fidelity (Wi-Fi), a universal serial bus (USB), and the like.

In some embodiments, an image rendering apparatus provided in an embodiment of the present disclosure may be implemented by software. The image rendering apparatus provided in this embodiment of the present disclosure may be provided as various software embodiments, including various forms including an application program, software, a software module, a script, or a code. FIG. 2 shows an image rendering apparatus 555 stored in the memory 550, which may be software in the form of a program or plug-in, and includes a series of modules, including a first processing module 5551, a second processing module 5552, a third processing module 5553, and a fourth processing module 5554. These modules are logical modules, and may be arbitrarily combined or further divided according to a function to be performed. Functions of the modules are described below.

In some other embodiments, the image rendering apparatus provided in this embodiment of the present disclosure may be implemented by hardware. As an example, the image rendering apparatus provided in this embodiment of the present disclosure may be a processor in the form of a hardware decoding processor. The processor is programmed to perform the image rendering method provided in the embodiments of the present disclosure. For example, the processor in the form of the hardware decoding processor may be one or more application-specific integrated circuits (ASICs), DSPs, programmable logic devices (PLDs), complex programmable logic devices (CPLDs), field-programmable gate arrays (FPGAs), or other electronic elements.

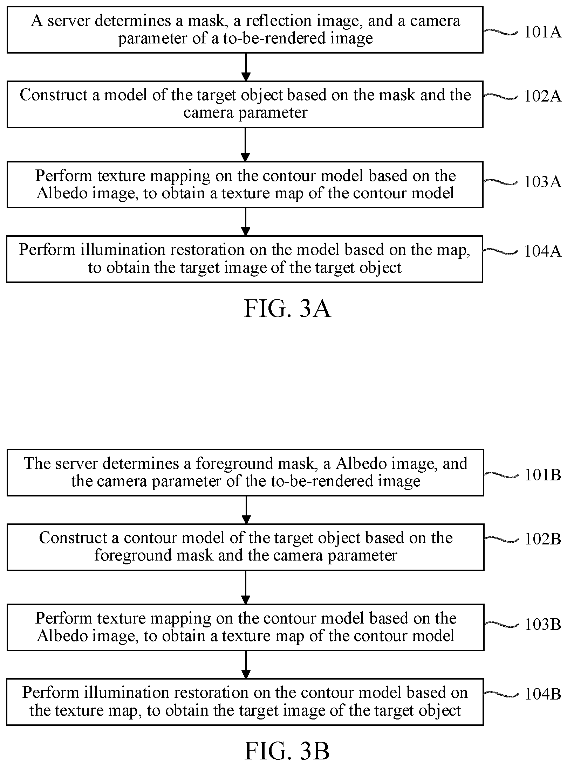

Based on the above description of the image rendering system and the electronic device provided in the embodiments of the present disclosure, the image rendering method provided in the embodiments of the present disclosure is described next. Referring to FIG. 3A, FIG. 3A is a schematic flowchart of an image rendering method according to an embodiment of the present disclosure. The description is based on an example in which the server 200 in FIG. 1 implements the image rendering method provided in this embodiment of the present disclosure.

Operation 101A: A server determines a mask, a reflection image, and a camera parameter of a to-be-rendered image.

In some embodiments, referring to FIG. 3B, FIG. 3B is a schematic flowchart of an image rendering method according to an embodiment of the present disclosure. Operation 101A shown in FIG. 3A may be implemented by using 101B shown in FIG. 3B:

Operation 101B: The server determines a foreground mask, an Albedo image, and the camera parameter of the to-be-rendered image.

The foreground mask is an image area where the target object is located in the to-be-rendered image. The image rendering method provided in the embodiments of the present disclosure is applicable to a rendering scene such as a video stream or an image. For the rendering scene of the video stream, the to-be-rendered image may be regarded as an image corresponding to a video frame in the video stream. A target object in the to-be-rendered image may be a variety of entity objects such as a car, a person, a tree, or a cup. A type of the target object is not limited in this embodiment of the present disclosure.

In some embodiments, the server may determine the to-be-rendered image in the following manner: collecting a video stream, where the video stream includes a plurality of video frames; and extracting a key frame from the video stream, and taking the key frame as the to-be-rendered image.

The key frame includes at least one of the following video frames: a video frame whose point cloud has a number of points selected as target feature points higher than a quantity-of-times threshold, each target feature point being a feature point that is repeatedly selected as an inlier in the point cloud; a video frame whose relative motion distance with an adjacent previous video frame is lower than a distance threshold; and a video frame that has a quantity of matching feature points with the adjacent previous video frame higher than a quantity threshold. Herein, the inlier refers to a point in a point cloud that conforms to a specific mode or a hypothesis point; it also represents normal or correct data. By contrast, an outlier is a point that does not conform to the specific mode or a hypothesis point and is considered as noise or abnormal data.

In practical applications, for the rendering scene of the video stream, each video stream includes a plurality of video frames, but video frames generally have a lot of redundancy. To improve efficiency of rendering processing and accuracy of rendering results, a key frame need to be extracted from the video stream, and an image corresponding to the extracted key frame is taken as the to-be-rendered image.

In some embodiments, when the key frame is extracted, a semantic-based video key frame extraction algorithm may be used. For example, a key frame of a video is first preliminarily extracted by using a hierarchical clustering algorithm, and then histogram comparison is performed on the preliminarily extracted key frame based on a semantic correlation algorithm to remove redundant frames, so as to determine the key frame of the video. Alternatively, depth features of the video frame may be extracted by using a convolutional autoencoder, and K-means clustering is performed thereon. In each type of video frames, a video frame whose resolution exceeds target resolution (which may be set according to an actual requirement) is selected as the preliminarily extracted key frame, then quadratic optimization is performed on the preliminarily extracted key frame by dot density, and a key frame obtained by quadratic optimization is taken as the key frame of the video stream.

In some other embodiments, the key frame may alternatively be extracted by using a simultaneous localization and mapping (SLAM) algorithm. For example, a random selection algorithm is used for the video frames, several feature points are randomly selected from a point cloud of a current video frame as inliers, and a model suitable for the inliers is calculated. Whether to eliminate the current video frame is determined according to a quantity of times the feature point (i.e., the above target feature point) in the point cloud corresponding to the current video frame is repeatedly selected, or whether to eliminate the current video frame is determined according to a relative motion distance between the current video frame and an adjacent previous video frame, or whether to eliminate the current video frame is determined according to whether a quantity of matching feature points between the current video frame and the adjacent previous video frame is higher than the quantity threshold. Certainly, whether to eliminate the current video frame may alternatively be determined based on the above two or more conditions. For example, if the quantity of times of selection corresponding to the target feature point in the point cloud corresponding to the current video frame is higher than the quantity-of-times threshold, the current video frame is not eliminated (retained), and the current video frame is taken as the key frame of the video stream. In another example, if the quantity of times of selection corresponding to the target feature point in the point cloud corresponding to the current video frame is less than the quantity-of-times threshold, the current video frame is eliminated. That is, the current video frame is not the key frame of the video stream. In another example, if the quantity of times of selection corresponding to the target feature point in the point cloud corresponding to the current video frame is higher than the quantity-of-times threshold, it is further determined whether the relative motion distance between the video frame and the adjacent previous video frame is less than the distance threshold. When the relative motion distance between the video frame and the adjacent previous video frame is no less than the distance threshold, the current video frame is eliminated. That is, the current video frame is not the key frame of the video stream. When the relative motion distance between the video frame and the adjacent previous video frame is less than the distance threshold, it is further determined whether the quantity of matching feature points between the video frame and the adjacent previous video frame is higher than the quantity threshold. When the quantity of the matching feature points between the video frame and the adjacent previous video frame is higher than the quantity threshold, the current video frame is not eliminated (retained). That is, the current video frame is determined to be the key frame of the video stream. In this way, screening accuracy of the key frame is further improved and redundancy is reduced as much as possible, thereby helping to improve efficiency of subsequent image rendering.

In some embodiments, the server may determine the foreground mask and the Albedo image that correspond to the to-be-rendered image in the following manner: performing background segmentation on the to-be-rendered image to obtain the foreground mask of the to-be-rendered image, and performing intrinsic image decomposition on the to-be-rendered image to obtain the Albedo image of the to-be-rendered image.

In practical applications, background segmentation may be performed on each to-be-rendered image by using a neural network segmentation algorithm for background removal (or a neural network model for background removal), to remove a background part to obtain the foreground mask of the to-be-rendered image. That is, the to-be-rendered image may be regarded as being obtained from a combination of the foreground mask (a foreground part) and the background part. The foreground mask is an image obtained by removing the background part from the to-be-rendered image. Intrinsic image decomposition is performed on the to-be-rendered image by using a neural network model for intrinsic image decomposition, to obtain an Albedo image and a shadow image. An image is divided into two parts by intrinsic image decomposition: a reflection image and an illumination image (which refers to an image reflecting an illumination condition of the to-be-rendered image). The Albedo image herein is a reflection image obtained by intrinsic image decomposition on the to-be-rendered image. Since the reflection image refers to an image part that can remain unchanged under changing illumination conditions, the Albedo image can retain the characteristic that the target object in the to-be-rendered image remains unchanged under the changing illumination conditions, which provides an initial Albedo texture value for subsequent fitting of PBR texture materials, thereby preventing noise that may be difficult to converge when the PBR texture materials are fit from randomly initialized parameters.

The camera parameter refers to a relevant parameter used by a camera collect the to-be-rendered image. When the camera parameter used by the camera to collect the to-be-rendered image is determined, the to-be-rendered image may be sparsely reconstructed based on a structure from motion (SFM) algorithm, to solve the camera parameter, for example, a camera internal parameter $K \in R^{3 \times 3}$ and a camera external parameter $[R \ |t] \in R^{3 \times 4}$. $K \in R^{3 \times 3}$ is an internal parameter matrix of the camera, which is a parameter that describes an internal attribute of the camera, including a focal length, principal point (optical center) coordinates, a distortion coefficient, and the like. The camera external parameter is a parameter that describes a position and an attitude of the camera in a world coordinate system (i.e., a pose parameter), and is irrelevant to the parameter of the internal attribute of the camera. A pose of the camera is described by a rotation matrix R and a translation vector t. The camera external parameter may change at different camera positions or shooting moments.

Operation 102A: Construct a model of the target object based on the mask and the camera parameter.

Herein, after the mask of the to-be-rendered image and the camera parameter used by the camera to collect the to-be-rendered image are obtained, the server may perform modeling based on the mask and the camera parameter of the to-be-rendered image, to obtain a model of the target object. The model is configured for three-dimensional construction of the target object.

In some embodiments, still referring to FIG. 3B, operation 102A shown in FIG. 3A may be implemented by using 102B shown in FIG. 3B:

Operation 102B: Construct a contour model of the target object based on the foreground mask and the camera parameter.

Herein, the foreground mask is an image area where the target object is extracted from the to-be-rendered image (a two-dimensional image). According to the foreground mask and the camera parameter, the contour model of the target object may be constructed to obtain a three-dimensional contour model (i.e., a three-dimensional white model) of the target object, i.e., a contour model in a three-dimensional scene. The contour model is configured for three-dimensional construction of the target object.

In practical applications, a high-quality contour model of the target object may be generated by using a visual hull carving technology and an inverse neural rendering technology. A processing flow thereof is as follows: A contour of the target object in the foreground mask of the to-be-rendered image is extracted by using the visual hull carving technology, to obtain an initial contour model (i.e., an initial white model) of the target object. Then, surface subdivision is performed on the initial contour model, to obtain an optimized contour model (i.e., an optimized white model). Then, image rendering is performed on the optimized contour model through a neural radiance field (NeRF) based on the camera parameter when the to-be-rendered image is collected, to obtain a rendered image, the NeRF is updated based on a residual error between the rendered image and the to-be-rendered image (i.e., an original input image), and next round of iteration is performed based on the updated NeRF network, and so on, until a contour model that meets an actual need (a final required white model) is obtained.

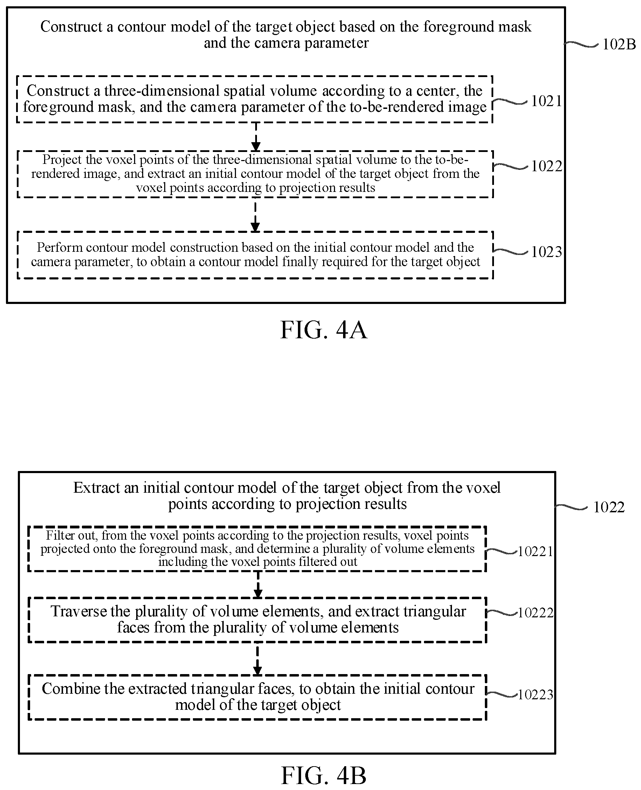

In some embodiments, referring to FIG. 4A, FIG. 4A is a schematic flowchart of a method for determining a contour model according to an embodiment of the present disclosure. Operation 102B shown in FIG. 3B may be implemented by using operation 1021 to operation 1023 shown in FIG. 4A:

Operation 1021: Construct a three-dimensional spatial volume according to a center, the foreground mask, and the camera parameter of the to-be-rendered image.

Herein, the visual hull carving technology solves a system of least squares equations based on a principle of triangulation according to the center p, the foreground mask, and internal and external parameters K, R, and t of the to-be-rendered image: $K(RC+t)=p$, an intersection point C where rays emitted from the center of the to-be-rendered image converge in the world coordinate system is estimated. A voxel whose resolution is target resolution (e.g., a 32*32*32 voxel) (that is, the three-dimensional spatial volume includes a plurality of voxel points) is constructed by taking C as a midpoint. A length of a unit voxel thereof is determined by an average length from a center of each camera to the intersection point.

Operation 1022: Project the voxel points of the three-dimensional spatial volume to the to-be-rendered image, and extract an initial contour model of the target object from the voxel points according to projection results.

Herein, the voxel points in the three-dimensional spatial volume are projected into the to-be-rendered image, and according to whether each voxel point falls on the foreground mask of the to-be-rendered image, it is determined whether the corresponding voxel point is occupied. If the voxel point falls on the foreground mask of the to-be-rendered image, it may be determined that the voxel point falling on the foreground mask of the to-be-rendered image is occupied. Finally, the initial contour model (i.e., the initial white model) is extracted from the occupied voxel point by using a marching cube algorithm.

To facilitate distinction, a contour model (i.e., a white model) extracted from the occupied voxel point is referred to as an initial contour model of the target object in the three-dimensional scene, and a contour model obtained by subsequent contour model construction based on the initial contour model is referred to as a final contour model of the target object in the three-dimensional scene (the final contour model is the final required white model).

In some embodiments, referring to FIG. 4B, FIG. 4B is a schematic flowchart of a method for determining a contour model according to an embodiment of the present disclosure. Operation 1022 in FIG. 4A may be implemented by using operation 10221 to operation 10223 shown in FIG. 4B: Operation 10221: Filter out, from the voxel points according to the projection results, voxel points projected onto the foreground mask, and determine a plurality of volume elements including the voxel points filtered out. Operation 10222: Traverse the plurality of volume elements, and extract triangular faces from the plurality of volume elements. Operation 10223: Combine the extracted triangular faces, to obtain the initial contour model of the target object.

A triangular face is a two-dimensional geometric figure including three vertexes and three edges. Each edge connects two vertexes, ultimately forming a closed triangle. The triangular face is generally configured for describing a surface of a three-dimensional object. A complex shape may be constructed by combining a large number of adjacent triangular faces, such as the initial contour model above.

There are a plurality of voxel points in the three-dimensional spatial volume. A volume element is a cube grid including 8 adjacent voxel points. After the voxel points of the three-dimensional spatial volume are projected to the to-be-rendered image, the voxel points falling on the foreground mask of the to-be-rendered image (that is, the occupied voxel points) are filtered out from the voxel points, and a plurality of volume elements that can be formed by the filtered voxel points are determined.

Herein, volume elements are taken as units to find a boundary between a content part and a background part in the three-dimensional spatial volume and extract triangular faces from the volume elements to fit this boundary. For convenience, voxel points including volume data are referred to as real points, and background voxel points other than the real points are referred to as imaginary points. In this way, a three-dimensional spatial volume is a lattice including various real points and imaginary points. In practical applications, the triangular faces are extracted from boundary volume elements (referring to volume elements with real points and imaginary points. This is because the boundary volume elements definitely include an "isosurface". The so-called isosurface refers to a curved surface in space, where the surface can represent a boundary between imaginary and real parts of the image). Therefore, when the triangular faces are extracted, all the formed volume elements are traversed, the boundary volume elements are filtered out from all the volume elements, the triangular faces are extracted from the boundary volume elements, and final three-dimensional mesh surface data can be formed by combining the extracted triangular faces. That is, the initial contour model of the target object is obtained.

Operation 1023: Perform contour model construction based on the initial contour model and the camera parameter, to obtain a contour model finally required for the target object.

In some embodiments, the server may perform contour model construction based on the initial contour model and the camera parameter in the following manner, to obtain the contour model of the target object: performing following multiple rounds of iterative processes based on the initial contour model and the camera parameter: performing surface subdivision on a to-be-subdivided contour model, to obtain an optimized contour model (where the optimized contour model is a contour model finally obtained by surface subdivision on the to-be-subdivided contour model), where the to-be-subdivided contour model in the first round of iteration is the initial contour model of the target object; performing image rendering on the optimized contour model through a NeRF network based on the camera parameter, to obtain a rendered image of the optimized contour model; and acquiring an absolute value of an error between the rendered image and the to-be-rendered image, entering next round of iteration when the absolute value of the error is greater than an error threshold, and stopping iteration until the absolute value of the error does not exceed the error threshold, to determine the contour model of the target object based on a corresponding optimized contour model when the iteration is stopped.

In practical applications, after the initial contour model of the target object is extracted, a differentiable white model may be constructed based on the inverse neural rendering technology. The process is a multi-stage iterative optimization process. For example, the first round of iteration process is as follows: Surface subdivision is performed on the initial contour model to obtain a first optimized contour model in the first round of iteration. Then, image rendering is performed on the first optimized contour model obtained in the first round of iteration by using the NeRF (which may be, for example, a fully connected neural network), to obtain a first rendered image of the first optimized contour model, and an absolute value of an error between the first rendered image and the to-be-rendered image (which may be an absolute value of an error in at least one of dimensions such as color, brightness, texture) is acquired. When the absolute value of the error is greater than the error threshold, a NeRF parameter is updated. Since internal and external parameters of the key frame are fixed and only a geometric form of the model needs to be considered, vertex coordinates of the optimized model and the NeRF parameter that implicitly stores vertex colors may be optimized and updated, to prevent explicit modeling of light, shadows, and colors. Next round of iteration is performed based on the updated NeRF parameter after the NeRF parameter is updated.

In the second round of iteration, surface subdivision is performed on the first optimized contour model obtained in the first round of iteration, to obtain a second optimized contour model in the second round of iteration. Then, image rendering is performed on the second optimized contour model in the second round of iteration by using the NeRF, to obtain a second rendered image of the first optimized contour model, and an absolute value of an error between the second rendered image and the to-be-rendered image is acquired. When the absolute value of the error is greater than the error threshold, the NeRF parameter is updated with reference to the above same manner. Next round of iteration is performed based on the updated NeRF parameter after the NeRF parameter is updated, and so on, the iteration is stopped until an absolute value of an error between a rendered image obtained by rendering by using the NeRF and the to-be-rendered image is less than the error threshold, and a corresponding optimized contour model when the iteration is stopped is taken as the contour model finally required for the target object. For example, if N (a positive integer greater than 2) rounds of iterations are performed in total, an Nth optimized contour model obtained in an Nth round of iteration is taken as the contour model finally required for the target object.

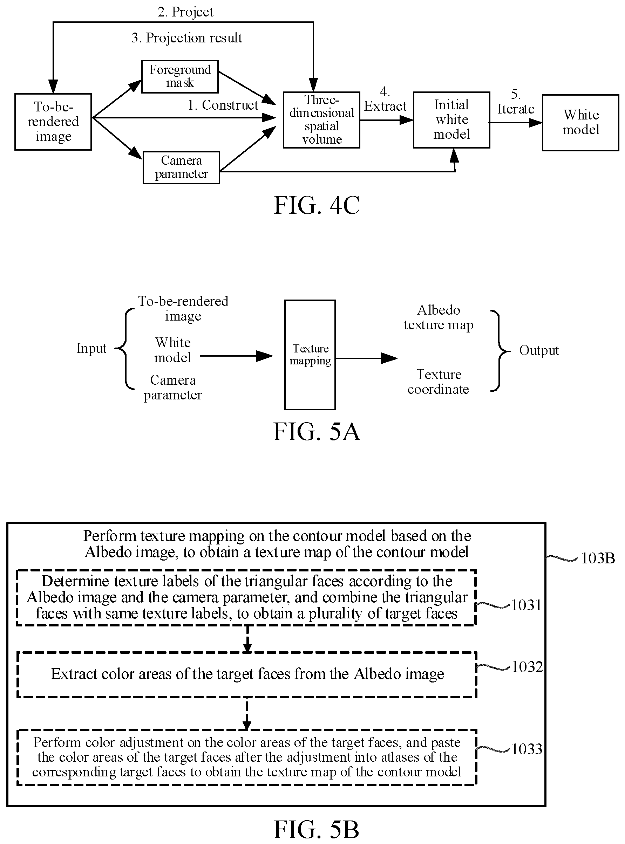

For example, the contour model is a white model. Referring to FIG. 4C, FIG. 4C is a schematic diagram of data flow directions of construction of a white model according to an embodiment of the present disclosure. Firstly, a three-dimensional spatial volume is constructed based on a to-be-rendered image, a foreground mask, and a camera parameter. Then, voxel points of the three-dimensional spatial volume are projected to the to-be-rendered image, and an initial white model of the target object in a three-dimensional scene is extracted from the voxel points according to projection results. Next, multiple rounds of iteration are performed based on the initial white model and the camera parameter, and the optimized white model corresponding to the last round of iteration is taken as the final white model of the target object in the three-dimensional scene. For example, in the first round of iteration, surface subdivision is performed on the initial white model (i.e., a to-be-subdivided white model) to obtain an optimized white model 1 (i.e., the first optimized white model above), and when an absolute value of an error between a rendered image 1 obtained by image rendering on the optimized white model 1 by using the NeRF (i.e., the first rendered image above) and the to-be-rendered image is greater than an error threshold (which may be set according to an actual requirement), the second round of iteration is entered. In the second round of iteration, the to-be-subdivided white model is the optimized white model 1 obtained in the first round of iteration, and surface subdivision is performed on the optimized white model 1 to obtain an optimized white model 2 (i.e., the second optimized white model above). If an absolute value of an error between a rendered image 2 (i.e., the second rendered image above) obtained by image rendering on the optimized white model 2 by using the NeRF and the to-be-rendered image is less than or equal to the error threshold, the third round of iteration is no longer entered. In this case, the optimized white model 2 (i.e., the second optimized white model above) obtained in the second round of iteration is taken as the final white model of the target object in the three-dimensional scene for subsequent processing.

The initial white model, the first optimized white model, the second optimized white model, ..., and an Nth optimized white model provided in this embodiments of the present disclosure do not specifically refer to a certain white model, but are configured to, during the surface subdivision, be distinguished from white models existing before the surface subdivision and white models updated after the surface subdivision. As an example, in the first round of iteration, during the surface subdivision on the to-be-subdivided white model, the to-be-subdivided white model before the surface subdivision may be referred to as the initial white model, and an optimized white model obtained after the surface subdivision may be referred to as the first optimized white model. In the second round of iteration, an optimized white model obtained after the surface subdivision on the first optimized white model obtained in the first round of iteration is referred to as the second optimized white model.

Similarly, the first rendered image and the second rendered image provided in this embodiments of the present disclosure do not specifically refer to a certain image, but are configured for, during the image rendering, being distinguished from a to-be-rendered image existing before the image rendering and a rendered image updated after the image rendering.

In some embodiments, the server may perform surface subdivision on the to-be-subdivided contour model in the following manner, to obtain the optimized contour model: performing triangular mesh subdivision on the to-be-subdivided contour model, to obtain the optimized contour model; or performing quadrilateral mesh subdivision on the to-be-subdivided contour model, to obtain the optimized contour model; where color errors of the triangular faces in the optimized contour model are less than a first error value, or a sum of the color errors of the triangular faces in the optimized contour model is less than a second error value; and the color errors are differences between color values of vertexes of the triangular faces projected onto the to-be-rendered image and color values at corresponding projection positions in the to-be-rendered image.

Herein, by using a surface subdivision algorithm, the to-be-subdivided contour model may be subdivided to obtain the optimized contour model. The surface subdivision algorithm includes Catmull-Clark subdivision and Loop subdivision. The Catmull-Clark subdivision is a subdivision rule for quadrilateral meshes, in which the to-be-subdivided contour model may be regarded as a three-dimensional model including a plurality of triangular faces, each triangular face includes one or more quadrilateral meshes, a new vertex is calculated and generated for each face of one quadrilateral mesh, a new vertex is calculated and generated for each edge of the quadrilateral mesh, at the same time, a position of each original vertex of the quadrilateral mesh is updated, the quadrilateral mesh is divided according to newly generated vertexes and updated vertexes, and so on, and the surface subdivision on the to-be-subdivided contour model can be achieved by performing multiple divisions.

The Loop subdivision is a subdivision rule for triangular meshes, in which the to-be-subdivided contour model may be regarded as a three-dimensional model including a plurality of triangular faces, each triangular face includes one or more triangular meshes that are split according to 1 to 4 triangles, a new vertex is calculated and generated for each edge, at the same time, a position of each original vertex is updated, the triangular mesh is divided according to newly generated vertexes and updated vertexes, and so on, and the surface subdivision on the to-be-subdivided contour model can be achieved by performing multiple divisions.

In practical applications, to prevent excessive occupation of the contour model caused by excessive subdivision, before each subdivision, a color error between a color value of a vertex of each triangular face of the optimized contour model obtained at the end of a previous round of optimization projected onto the to-be-rendered image and a color value at a corresponding projection position in the to-be-rendered image, and the triangular faces whose color errors are less than a certain error threshold (which may be set according to an actual requirement) are no longer subdivided. Alternatively, a sum of the color errors of the triangular faces is calculated, and when the sum of the color errors is less than the error threshold, the to-be-subdivided contour model is no longer subdivided.

The corresponding projection position in the to-be-rendered image refers to a projection position of a vertex of the triangular face in the to-be-rendered image. For example, if a vertex of a triangular face 1 is projected to a position A in the to-be-rendered image, the position A is a projection position corresponding to the triangular face 1.

As an example, assuming that the to-be-subdivided contour model may be regarded as a three-dimensional model including N (positive integers greater than 2) triangular faces and the vertex of the triangular face 1 is projected to the position A in the to-be-rendered image, a color error 1 between a color value of the vertex of the triangular face 1 projected to the position A in the to-be-rendered image and a color value of the position A in the to-be-rendered image is acquired. For the convenience of description, the color error 1 may be referred to as a color error corresponding to the triangular face 1. In this way, the color errors corresponding to all the triangular faces are obtained. That is, the color error 1 corresponding to the triangular face 1, the color error 2 corresponding to the triangular face 2, ..., and the color error N corresponding to the triangular face N are acquired. Moreover, a size relationship between the color error corresponding to each triangular face and the first error value is judged, and the triangular face whose color error is less than the first error value is no longer subdivided. For example, if the color error 1 corresponding to the triangular face 1 is greater than or equal to the first error value, the triangular face 1 is continuously subdivided. If the color error 2 corresponding to the triangular face 2 is less than the first error value, the triangular face 2 is no longer subdivided. Alternatively, the color errors corresponding to the vertexes of all the triangular faces (for example, the color error 1 corresponding to the triangular face 1, the color error 2 corresponding to the triangular face 2, ..., and the color error N corresponding to the triangular face N are added) to obtain a sum of the color errors, and a size relationship between the sum of the color errors and a second error value is obtained by comparison. When the sum of the color errors is less than the error threshold, the to-be-subdivided contour model is no longer subdivided.

In some embodiments, the server may determine the contour model of the target object based on the corresponding optimized contour model when the iteration is stopped in the following manner: performing surface construction on the corresponding optimized contour model when the iteration is stopped, to obtain a constructed optimized contour model, and taking the constructed optimized contour model as the contour model finally required for the target object.

In practical applications, surface reconstruction may be performed on the optimized contour model outputted above. For example, surface reconstruction is performed on the optimized contour model by using an open-source computational geometry algorithms library (CGAL), to obtain a constructed optimized contour model, and the constructed optimized contour model is taken as a final contour model of the target object in the three-dimensional scene. In this way, non-popular surfaces, vertexes, holes, and the like that appear in the construction of the differentiable white model are removed, which improves accuracy of the contour model finally obtained, and accuracy of image rendering can be improved by using the finally obtained contour model for subsequent image rendering.

Operation 103A: Map the model to the reflection image, to obtain a map of the model.

Herein, after the model of the target object is obtained, the model of the target object may be mapped based on the reflection image of the to-be-rendered image, to obtain the map corresponding to the model of the target object.

In some embodiments, still referring to FIG. 3B, operation 103A shown in FIG. 3A may be implemented by using 103B shown in FIG. 3B: Operation 103B: Perform texture mapping on the contour model based on the Albedo image, to obtain a texture map of the contour model.

In practical applications, the contour model includes tens of thousands or even millions of vertexes and faces (such as triangular faces). That is, the contour model includes a plurality of triangular faces. Each vertex is determined by a set of three-dimensional coordinates in the world coordinate system. Each triangular face includes index numbers of three vertexes. The triangular faces corresponding to the contour model may be mapped to the Albedo image of the to-be-rendered image by using a multi-view stereo-texturing (MVS-Texturing) technology according to operations such as view-selection, color adjustment, and UV parameterization (UV atlas), and be finally combined into an Albedo texture map. The UV parameterization is to expand adjacent triangular faces from the same to-be-rendered image onto a two-dimensional image. Pixel values of the two-dimensional image are filled with sampling texture, and normalized coordinates of vertexes of the triangular faces on the image are referred to as UV coordinates (texture coordinates). All triangular faces in the contour model are looped, to finally obtain the Albedo texture map and UV coordinates of all the triangular faces of the Albedo texture map.

Referring to FIG. 5A, FIG. 5A is a schematic diagram of data flow directions of texture mapping according to an embodiment of the present disclosure, including: input for texture reconstruction: a contour model (i.e., a white model), a to-be-rendered image, and a camera parameter; and output: a texture map and texture coordinates. In addition to vertexes and triangular faces, a renderable model also needs to include at least texture coordinates (i.e., UV coordinates) of each vertex and an atlas corresponding to the texture coordinates. Texture mapping is a process of generating an atlas according to the contour model, the to-be-rendered image, and the camera parameter. The most basic unit connecting input and output is a triangular face. A core step is to find and intercept, for each triangular face, an optimal area (i.e., a color area or a color map below) from the Albedo image corresponding to the inputted to-be-rendered image to reflect a color thereof, and paste the intercepted optimal area into the atlas. When a plurality of triangular faces are provided, the optimal areas of the plurality of triangular faces are all pasted into the atlas to obtain the texture map (or an Albedo texture map).

In some embodiments, referring to FIG. 5B, FIG. 5B is a schematic flowchart of a method for texture mapping according to an embodiment of the present disclosure. Operation 103B in FIG. 3B may be implemented by using operation 1031 to operation 1033 shown in FIG. 5B:

Operation 1031: Determine texture labels of the triangular faces according to the Albedo image and the camera parameter, and combine the triangular faces with same texture labels, to obtain a plurality of target faces.

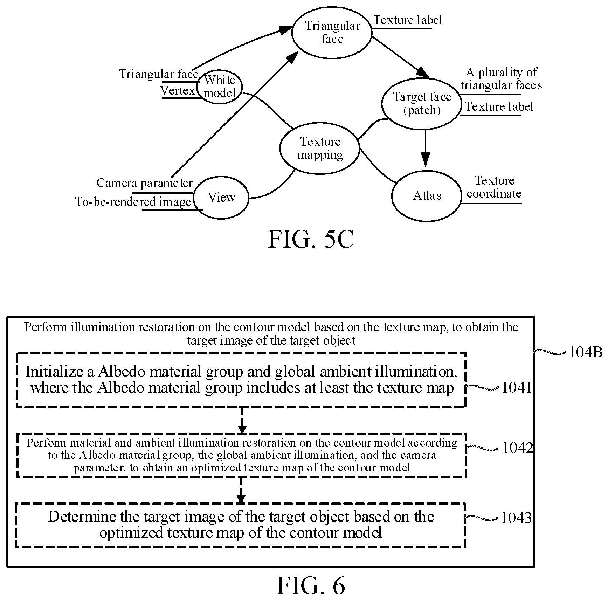

Referring to FIG. 5C, FIG. 5C is a schematic diagram of combination of triangular faces according to an embodiment of the present disclosure. In practical applications, the contour model (i.e., the white model) includes tens of thousands or even millions of vertexes and faces (triangular faces are taken as an example). To minimize the seams produced when different triangular face maps are combined, some consecutive triangular faces may be combined into a patch (i.e., a target face). Before the combination, view-selection is required. Herein, each inputted to-be-rendered image and a camera parameter corresponding thereto may be referred to as a view. Referring to the camera parameter, an optimal view may be found for each triangular face, to determine a color expression of the triangular face. Herein, an index number of the view is recorded with a texture label. All triangular faces using the same texture label are combined into a target face (patch), and an area (i.e., a color area) where the target face (patch) is located is intercepted from the Albedo image corresponding to the to-be-rendered image, to paste the intercepted color area in the atlas to obtain an Albedo texture map. Texture coordinates of all vertexes included in each target face are recorded, that is, the triangular faces using the same texture label (i.e., some consecutive triangular faces) are combined into a target face (that is, a face formed by combining the triangular faces using the same texture label is referred to as a target face), to paste a color area of the target face in the atlas to obtain an Albedo texture map.

The optimal view as referred to above meets at least the following conditions: 1) the triangular face is visible at the view; 2) a user can see a front side of the triangular face at the view; and 3) at the view, a normal direction of the triangular face is close to a direction in which the triangular face is faced.

Operation 1032: Extract color areas of the target faces from the Albedo image.

In practical applications, alternatively, the triangular faces using the same texture label (i.e., some consecutive triangular faces) are combined into a target face. For each target face, a color area of the target face is extracted from an Albedo image, to paste the extracted color area of the target face in an atlas of the target face, and then vertexes of the contour model correspond to pixels of the atlas to obtain an Albedo texture map.

In the above manner, on the one hand, computational overhead can be reduced, and on the other hand, continuity of colors can be enhanced, so that a pattern in the Albedo texture map is consistent with the pattern in the to-be-rendered image, thereby preventing an influence of a spliced seam on a final rendering effect.

Operation 1033: Perform color adjustment on the color areas of the target faces, and paste the color areas of the target faces after the adjustment into atlases of the corresponding target faces to obtain the texture map of the contour model.

Herein, there may be adjacent triangular faces sampled from different images (such as different to-be-rendered images), and the different images may cause inconsistency between visual colors due to changes in illumination and occlusion relationships. Therefore, before the color area of the target face is pasted to the atlas of the target face, color adjustment such as global color equalization or local color equalization may be first performed on the color area of the target face, and a color area after the color adjustment is pasted into the atlas of the target face. During the color adjustment, color continuity of different sampled images may be constrained by minimizing an energy equation, to make the texture color continuous and consistent. The energy equation is defined as a sum of differences of absolute values of colors of all adjacent triangular faces corresponding to the different sampled images.

In other words, after each target face is obtained, for each target face, an area where the target face (patch) is located is intercepted from the to-be-rendered image indicated by the corresponding view to form a color map (i.e., the above color area), and after the color map is adjusted to obtain an adjusted color map, image coordinates of each vertex included in the target face in the adjusted color map are calculated through the camera parameter of the view. Next, a new atlas is created, the adjusted color map corresponding to the target face is put into the new atlas, and coordinates of each vertex of the target face in the atlas (i.e., the UV parameterization above) are calculated, so as to transfer the image coordinates of each vertex included in the target face from the color map to the atlas. The coordinates in the atlas are texture coordinates of each vertex included in the target face. When a plurality of target faces are provided, the color map corresponding to each target face may be put into the atlas in the above manner. If one atlas is full, a new atlas is created. So far, a texture map and texture coordinates corresponding to the contour model of the target object in the three-dimensional scene can be obtained.

In the above manner, compared with direct parameterization on the contour model, when UV coordinates and Albedo texture generated by using the MVS-Texturing technology may give each texture block a greater weight corresponding to the to-be-rendered image during subsequent fitting of PBR texture materials, which can reduce a probability of a spliced seam and a color difference to some extent.

Operation 104A: Perform illumination restoration on the model based on the map, to obtain the target image of the target object.

Herein, after the map corresponding to the model of the target object is obtained, illumination restoration may be performed on the model of the target object based on the map, to obtain the target image of the target object in three dimensions.

In some embodiments, still referring to FIG. 3B, operation 104A shown in FIG. 3A may be implemented by using 104B shown in FIG. 3B:

Operation 104B: Perform illumination restoration on the contour model based on the texture map, to obtain the target image of the target object.

In some embodiments, referring to FIG. 6, FIG. 6 is a schematic flowchart of a method for acquiring a target image according to an embodiment of the present disclosure. Operation 104B in FIG. 3B may be implemented by using operation 1041 to operation 1042 shown in FIG. 6:

Operation 1041: Initialize an Albedo material group and global ambient illumination, where the Albedo material group includes at least the texture map. Operation 1042: Perform material and ambient illumination restoration on the contour model according to the Albedo material group, the global ambient illumination, and the camera parameter, to obtain an optimized texture map of the contour model. Operation 1043: Determine the target image of the target object based on the optimized texture map of the contour model.

Herein, the illumination restoration refers to material and ambient illumination restoration. A main purpose of model material and ambient illumination is to fit PBR texture materials and ambient illumination during shooting that are suitable for modern graphics engines based on a previous module product (the texture map). Before the fitting, the three-dimensional contour model (that is, the contour model of the target object in the three-dimensional scene, i.e., the three-dimensional white model) and the Albedo texture map (that is, the above texture map) are loaded, and a PBR material group $T_{init}$ (an Albedo texture map $A_{init}$, a normal map $N_{init}$, a specular map $S_{init}$, and a roughness map $R_{init}$) and global ambient illumination $GI_{init}$ are initialized. Then, model material and ambient illumination optimization is performed. For example, image rendering is performed on the contour model through an ambient illumination and microfacet model of a panoramic image, to obtain a rendered image, and an absolute value of an error between the rendered image and the to-be-rendered image is acquired. When the absolute value of the error is greater than or equal to the error threshold, a gradient of the ambient illumination and microfacet model of the panoramic image is calculated, a parameter of the ambient illumination and microfacet model of the panoramic image is updated by using the gradient, to perform next round of iteration. During the optimization, the Albedo texture map $A_{init}$ may be first fixed, and the normal map $N_{init}$, the specular map $S_{init}$, the roughness map $R_{init}$, and the global ambient illumination $GI_{init}$ are updated at a larger learning rate $\alpha_1$. After a normal map $N_{init}$, a spec-

ular map $S_{init}$, a roughness map $R_{init}$, and global ambient illumination $GI_{init}$ that are appropriate are obtained through a certain quantity of times of iteration, the normal map $N_{init}$, the specular map $S_{init}$, the roughness map $R_{init}$, and the global ambient illumination $GI_{init}$ after the optimization are fixed, and the Albedo texture map $A_{init}$ is updated and optimized at a learning rate $\alpha_2$ less than $\alpha_1$.

Herein, a model material group $T_{opti}$ (an Albedo texture map $A_{opti}$, a normal map $N_{opti}$, a specular map $S_{opti}$, and a roughness map $R_{opti}$) and global ambient illumination $GI_{opti}$ that are optimized are finally outputted, and the Albedo texture map in the optimized model material group is taken as an optimized texture map or an optimized Albedo texture map.

When the target image of the target object is determined based on the optimized texture map of the contour model, the optimized texture map of the contour model may be directly taken as the target image of the target object. Alternatively, the optimized texture map may be re-illuminated, to obtain the target image of the target object.

In some embodiments, the server may re-illuminate the optimized texture map in the following manner, to obtain the target image of the target object: determining a scene lighting source configured for re-illumination; and adjusting a pixel value of the optimized texture map according to the scene lighting source, to obtain an image matching the scene lighting source, and taking the obtained image matching the scene lighting source as the target image of the target object.

Herein, after the model materials and the global ambient illumination that are optimized are obtained, model editing may be performed according to an actual requirement. For example, ambient illumination migration, model material editing, re-illumination, or the like is performed on the to-be-rendered image corresponding to each key frame. For example, during the re-illumination, after illumination and a material that are new are assigned to the to-be-rendered image according to the scene lighting source configured for re-illumination, illumination and material information of the to-be-rendered image are re-illuminated, to obtain a target image of the target object in the to-be-rendered image under the illumination and the material that are new.

In the embodiments of the present disclosure, relevant data such as user information (for example, a to-be-rendered image of a user) is involved. When the embodiments of the present disclosure are applied to specific products or technologies, user permission or consent is required, and collection, use, and processing of the relevant data need to comply with relevant laws, regulations, and standards of relevant countries and regions.

In the above manner, after the to-be-rendered image is rendered, efficiency of image rendering can be improved without training network parameters. In addition, texture mapping is performed based on the Albedo image, to obtain the texture map, and the target image is obtained by illumination restoration based on the texture map. Since the Albedo image reflects an image part in the to-be-rendered image that can remain unchanged under changing illumination conditions, the characteristic that the target object in the to-be-rendered image remains unchanged under the changing illumination conditions is also retained in the texture map obtained based on the Albedo image. Therefore, the target image obtained by illumination restoration on the texture map can adapt to more sensitive changes in ambient illumination, thereby improving the quality of image rendering.

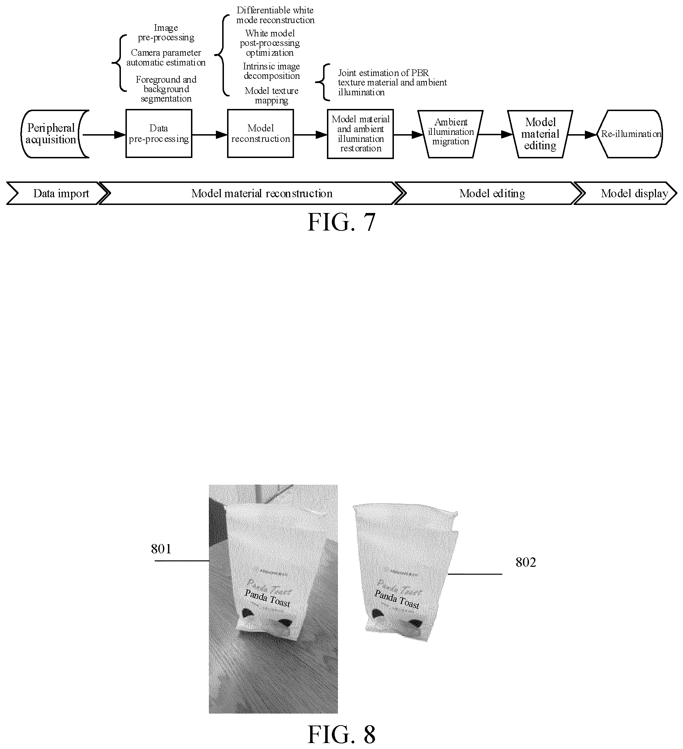

Exemplary application of embodiments of the present disclosure in an actual application scenario is described below. Referring to FIG. 7, FIG. 7 is a schematic flowchart of an image rendering method according to an embodiment of the present disclosure. As shown in FIG. 7, an entire algorithm process may be divided into four operations, namely data import, model material reconstruction, model editing, and model display, which will be described one by one next.

1. Data import

A to-be-rendered video stream is collected by using a video collection device, and the collected video stream is inputted to a data pre-processing module in model material reconstruction.

2. Model material reconstruction

The model material reconstruction includes the data pre-processing module, a model reconstruction module, and a model material and ambient illumination restoration module. Each module will be described next.

2.1 Data pre-processing

The data pre-processing module includes three submodules of image pre-processing, camera parameter estimation, and foreground and background segmentation. The image pre-processing is configured for extracting key frames from the video stream. For example, N key frames $KF_i$ ($i \in 1, ..., N$) are extracted from the video stream by using the SLAM algorithm, to filter out video frames that may be overexposed or motion blurred in the video stream, so as to reduce a scale of input data of the algorithm in subsequent links and improve quality of data of the algorithm.

Camera parameter estimation: Sparse reconstruction is performed by using the SFM algorithm, to solve a camera parameter corresponding to each key frame $KF_i$, for example, a camera internal parameter $K \in R^{3 \times 3}$ and a camera external parameter $[R | t] \in R^{3 \times 4}$.

Foreground and background segmentation: Image segmentation is performed on each key frame by using the neural network segmentation algorithm, to remove a background part of the key frame and obtain a foreground mask $Mask_i$ of the key frame (i.e., an image area where the target object is located in the to-be-rendered image). As shown in FIG. 8, FIG. 8 is a schematic diagram of image segmentation according to an embodiment of the present disclosure. Image segmentation is performed on an original image 801 in a key frame, and a background part in the original image 801 is taken out, to obtain a foreground mask 802 of the original image 801.

2.2 Model reconstruction

The model reconstruction includes four submodules of differentiable white model construction, white model geometry optimization, intrinsic image decomposition, and model texture mapping. Each module will be described next.

2.2.1 Differentiable white model construction

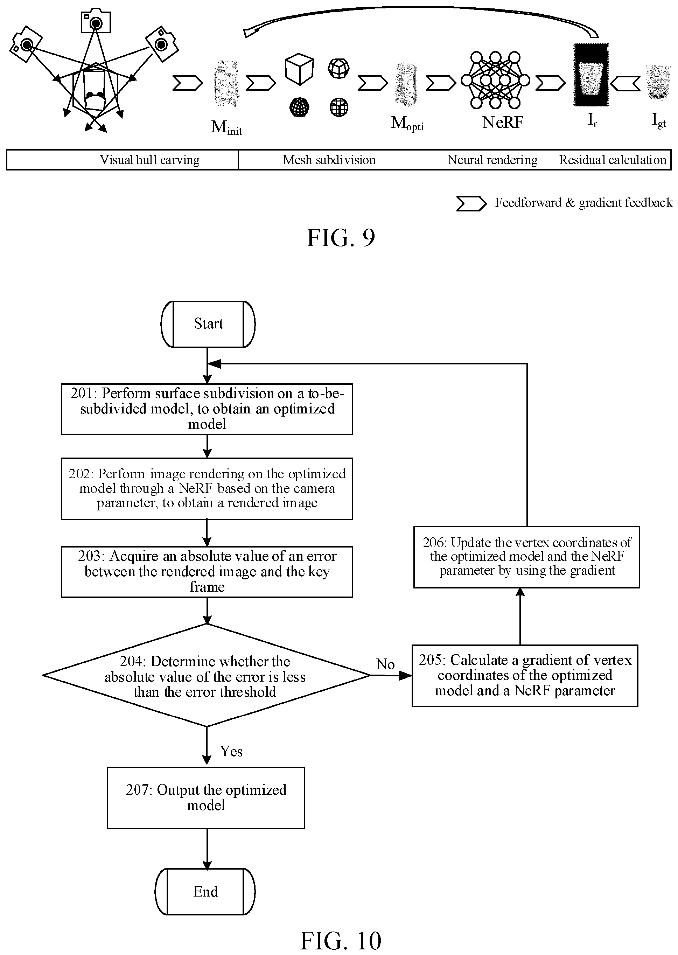

Referring to FIG. 9, FIG. 9 is a schematic diagram of construction of a white model according to an embodiment of the present disclosure. The differentiable white model construction generates a high-quality contour model of a reconstructed object (i.e., the above white model) mainly by using the visual hull carving technology and the inverse neural rendering technology. A processing flow thereof is as follows: a contour of each key frame is extracted by using the visual hull carving technology, to obtain an initial module $M_{init}$ of the key frame (i.e., the initial contour model or initial white model above), surface subdivision is performed on the initial module $M_{init}$ of the key frame, to obtain an optimized model $M_{opti}$ of the key frame (i.e., the optimized contour model or optimized white model above), image rendering is then performed on the optimized model $M_{opti}$ of the key frame by using the NeRF, to obtain a rendered image of the key frame, and a NeRF parameter is updated based on a residual error between the rendered image of the key frame and the original image.

The visual hull carving technology solves a system of least squares equations based on a principle of triangulation according to an image center p, the foreground mask $Mask_i$, and internal and external parameters K, R, and t of each key frame: $K(RC+t)=p$, an intersection point C where rays emitted from a center of each key frame converge in the world coordinate system is estimated. A voxel whose resolution is 32*32*32 (i.e., the three-dimensional spatial volume above) is constructed by taking C as a midpoint. A length of a unit voxel thereof is determined by an average length from a center of each camera to the intersection point. Centers of the voxels are projected onto the key frames, whether each voxel is occupied is determined based on whether the center of the voxel falls on the foreground mask of the key frame, and finally, an initial model $M_{init}$ is extracted from the occupied voxel by using the marching cube algorithm.

In other words, for each key frame (i.e., the to-be-rendered image above), voxel points falling on the foreground mask of the key frame are filtered out from the voxel points, a plurality of volume elements formed by the voxel points filtered out are determined, all the volume elements are traversed, triangular faces are extracted from the volume elements, and the triangular faces extracted are combined to obtain an initial model $M_{init}$ of the target object in the three-dimensional scene indicated by the foreground mask in the key frame.

The differentiable white model construction based on the inverse neural rendering technology is a multi-stage iterative optimization process. Referring to FIG. 10, FIG. 10 is a schematic flowchart of a method for constructing a white model according to an embodiment of the present disclosure. The method includes the following operations:

Operation 201: Perform surface subdivision on a to-be-subdivided model, to obtain an optimized model.

In the first round of iteration, the to-be-subdivided model is an initial model, and in subsequent iterations, the to-be-subdivided model is an optimized model obtained in the previous round of iteration. For example, in the first round of iteration, surface subdivision is performed on the initial model, to obtain an optimized model 1, in the second round of iteration, surface subdivision is performed on the optimized model 1 obtained in the first round of iteration, to obtain an optimized model 2, in the third round of iteration, surface subdivision is performed on the optimized model 2 obtained in the second round of iteration, to obtain an optimized model 3, and so on, and an optimized model obtained by surface subdivision in the last round of iteration is taken as a final optimized model (i.e., the contour model finally required for the target object in the to-be-rendered image above).

Taking the first round of iteration as an example, the initial model $M_{init}$ of each key frame may be subdivided by using a surface subdivision algorithm, to obtain an optimized model $M_{opti}$ (i.e., the optimized contour model or optimized white model above). The surface subdivision algorithm includes Catmull-Clark subdivision and Loop subdivision. The Catmull-Clark subdivision is a subdivision rule for quadrilateral meshes, in which the initial model $M_{init}$ includes a plurality of triangular faces, each triangular face may be regarded as including one or more quadrilateral meshes, and during the subdivision, a new vertex is calculated and generated for each face of one quadrilateral mesh, a new vertex is calculated and generated for each edge of the quadrilateral mesh, at the same time, a position of each original vertex of the quadrilateral mesh is updated, and the quadrilateral mesh is divided according to updated vertexes, to achieve the surface subdivision on the initial model $M_{init}$.

The Loop subdivision is a subdivision rule for triangular meshes, in which the initial model $M_{init}$ includes a plurality of triangular faces, each triangular face may be regarded as including one or more triangular meshes which are split according to 1 to 4 triangles, a new vertex is calculated and generated for each edge, at the same time, a position of each original vertex is updated, and the triangular mesh is divided according to updated vertexes, to achieve the surface subdivision on the initial model $M_{init}$.

In practical application, to prevent excessive occupation of the model caused by excessive subdivision, before each subdivision, a color error between a color value of a vertex of each triangular face corresponding to the optimized model obtained at the end of a previous round of optimization projected onto the corresponding key frame and a color value at a corresponding projection position in the key frame, and the triangular faces whose color errors are less than a certain error threshold (i.e., the first error value above) are no longer subdivided. Alternatively, a sum of the color errors of the triangular faces is calculated, and when the sum of the color errors is less than the error threshold, the model is no longer subdivided.

Operation 202: Perform image rendering on the optimized model through a NeRF based on the camera parameter, to obtain a rendered image.

Herein, for each key frame, a camera is set according to internal and external parameters of the key frame, and the corresponding optimized model $M_{opti}$ is rendered to a view of the key frame through the NeRF, to obtain the rendered image.

Operation 203: Acquire an absolute value of an error between the rendered image and the key frame.

Operation 204: Determine whether the absolute value of the error is less than the error threshold.

Herein, when it is determined that the absolute value of the error between the rendered image and the key frame is greater than or equal to the error threshold, operation 205 is performed. When it is determined that the absolute value of the error between the rendered image and the key frame is less than the error threshold, operation 207 is performed.

Operation 205: Calculate a gradient of vertex coordinates of the optimized model and a NeRF parameter.

Operation 206: Update the vertex coordinates of the optimized model and the NeRF parameter by using the gradient.

Herein, when it is determined that the absolute value of the error between the rendered image and the key frame is greater than or equal to the error threshold, next round of iteration is performed. Since internal and external parameters of the key frame are fixed and only a geometric form of the model needs to be considered, the vertex coordinates $V_{opti}$ of the optimized model and the NeRF parameter that implicitly stores vertex colors may be optimized and updated, to prevent explicit modeling of light, shadows, and colors.

Operation 207: Output the optimized model.

Herein, when the absolute value of the error between the rendered image and the key frame is less than the error threshold, the iteration is stopped, and a corresponding optimized model when the iteration is stopped (i.e., an optimized model obtained in the last round of iteration) is determined to be a contour model under the view of the key frame (i.e., a white model).

## 2.2.2 White model geometry optimization

Herein, to remove non-popular surfaces, vertexes, holes, and the like that appear in the differentiable white model construction, surface reconstruction may be performed on the optimized model outputted in operation 207 in section 2.2.1. For example, surface reconstruction is performed on the optimized model by using the CGAL, to obtain a reconstructed optimized model, and the reconstructed optimized model is taken as a white model of the key frame in the three-dimensional scene (i.e., the contour model above).

## 2.2.3 Intrinsic image decomposition

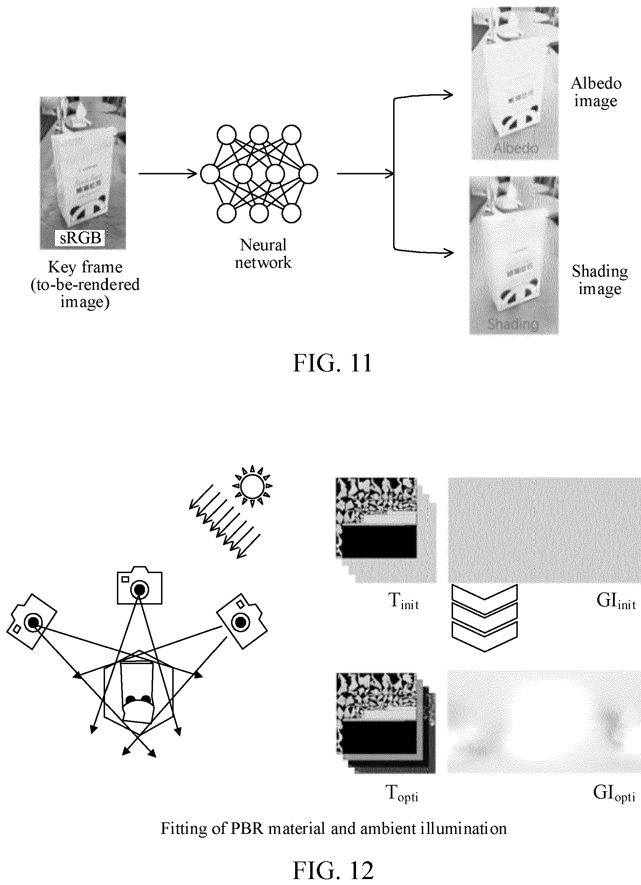

Referring to FIG. 11, FIG. 11 is a schematic diagram of intrinsic image decomposition according to an embodiment of the present disclosure. The key frame is decoupled into an Albedo image and a shadow image by using a neural network, with a purpose of providing an initial Albedo texture value for subsequent fitting of PBR texture materials and preventing noise that may be difficult to converge when the PBR texture materials are fitted from randomly initialized parameters.

## 2.2.4 Model texture mapping

Model faces may be mapped to the Albedo image of the key frame in different views by using the MVS-Texturing technology according to operations such as view-selection, color adjustment, and UV parameterization (UV atlas), and be finally combined into an Albedo texture map. Compared with direct parameterization on the white model, when UV coordinates and Albedo texture $A_{init}$ generated by using the MVS-Texturing technology may give each texture block a greater weight corresponding to the view of the key frame during subsequent fitting of PBR texture materials, which can reduce a probability of a spliced seam and a color difference to some extent.

View-selection is to find, from all the key frames, a key frame at a maximum cosine angle with a normal vector direction thereof for each triangular face that constitutes the three-dimensional model (i.e., the contour model or white model above), and project the triangular face onto the key frame to sample a corresponding texture sampling area. In practical applications, by taking each key frame and the camera parameter when the key frame is collected as a texture label, the key frame, a white model of the key frame (including a plurality of vertexes and triangular faces), and the camera parameter of the key frame (i.e., the camera parameter when the key frame is collected) are inputted, and a renderable model is outputted. In addition to vertexes and triangular faces, the model also needs to include at least texture coordinates of each vertex and an atlas corresponding to the texture coordinates.

During the rendering, for each triangular face that constitutes the white model, a color area corresponding to the triangular face is to found and intercepted from the Albedo image corresponding to the inputted to-be-rendered image (i.e., the key frame) to reflect a color thereof, and the intercepted color area is pasted into the atlas. However, in practical applications, instead of directly pasting the color area of each triangular face into the atlas, the triangular faces using the same texture label (i.e., some consecutive triangular faces) are combined into a target face, and a color area of the target face is pasted in an atlas of the target face, to obtain an Albedo texture map.

In addition, there may be adjacent triangular faces sampled from different key frames, and the key frames may cause inconsistency between visual colors due to changes in illumination and occlusion relationships. Therefore, before the color area of the target face is pasted to the atlas, color adjustment such as global color equalization or local color equalization may be first performed on the color area of the target face, and a color area after the color adjustment is pasted into the atlas of the target face. During the color adjustment, color continuity of the different key frames may be constrained by minimizing an energy equation, to make the texture color continuous and consistent. The energy equation is defined as a sum of differences of absolute values of colors of all adjacent triangular faces corresponding to the different key frames.

The UV parameterization is to expand adjacent triangular faces from the same key frame onto a two-dimensional image. Pixel values of the two-dimensional image are filled with corresponding sampling texture, and normalized coordinates of vertexes of the triangular face on the image are referred to as UV coordinates. All triangular faces in the white model of each key frame are looped, to finally obtain the Albedo texture map $A_{init}$ and UV coordinates of all the triangular faces of the Albedo texture map.

## 2.3 Model material and ambient illumination restoration

A model material and ambient illumination restoration module is mainly intended to fit PBR texture materials and ambient illumination during shooting that are suitable for modern graphics engines based on a previous module product (the Albedo texture map).

Referring to FIG. 12, FIG. 12 is a schematic diagram of fitting of model materials and ambient illumination according to an embodiment of the present disclosure. Before the fitting, the three-dimensional white model $M_{opti}$ and the Albedo texture map $A_{init}$ obtained in 2.2 are loaded, the PBR texture material $T_{init}$ (an Albedo texture map $A_{init}$, a normal map $N_{init}$, a specular map $S_{init}$, and a roughness map $R_{init}$) and global ambient illumina-

tion $GI_{init}$ are initialized, and model material and ambient illumination optimization is performed, to obtain an optimized PBR material group $T_{opti}$ and $GI_{opti}$.

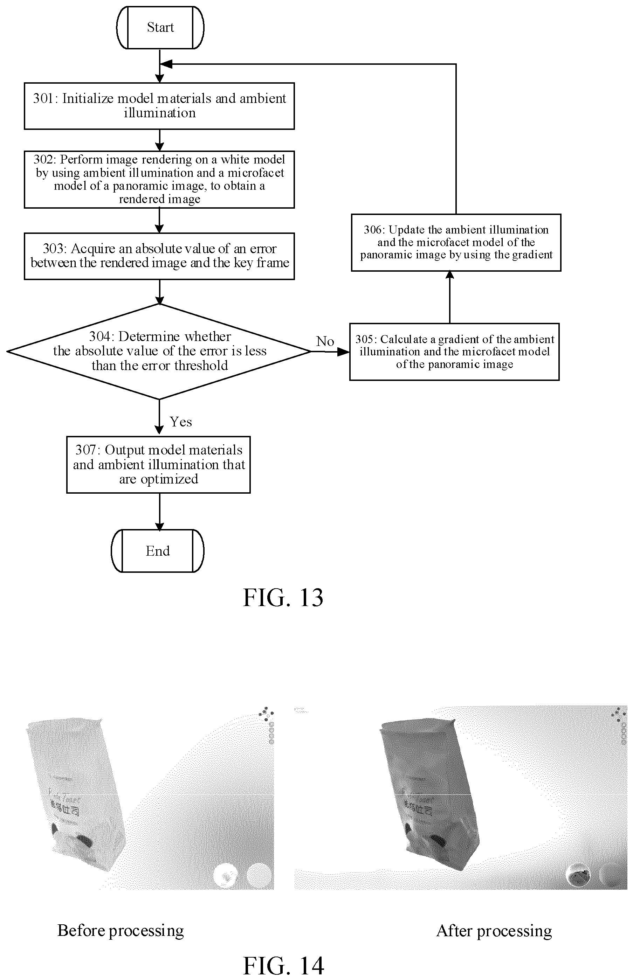

Referring to FIG. 13, FIG. 13 is a schematic flowchart of fitting of model materials and ambient illumination according to an embodiment of the present disclosure. The method includes the following operations:

Operation 301: Initialize model materials and ambient illumination.

In practical applications, initializing the model material is to initialize a model material group $T_{init}$ (an Albedo texture map $A_{init}$, a normal map $N_{init}$, a specular map $S_{init}$, and a roughness map $R_{init}$), and initializing the ambient illumination is to initialize global ambient illumination $GI_{init}$.

Operation 302: Perform image rendering on a white model by using ambient illumination and a microfacet model of a panoramic image, to obtain a rendered image.

Herein, for each key frame, a camera is set according to internal and external parameters of the key frame, and image rendering is performed on the white model by using the ambient illumination and the microfacet model of the panoramic image, to obtain a corresponding rendered image.

A color of each three-dimensional point may be expressed as an integral of a product of incident radiance $L_i(\omega_i)$ and a bidirectional scattering distribution function $f(\omega_i, \omega_o)$ of the white model. An integral domain is a hemisphere $\Omega$ centered on a surface intersection normal n, $\omega_i$, $\omega_o$ are incident and exit directions of light respectively, and n is a normal vector of the point.

$$L(\omega_o) = \int_{\Omega} L_i(\omega_i) f(\omega_i, \omega_o)(\omega_i \cdot \mathbf{n}) d\omega_i$$

The bidirectional scattering distribution function of the microfacet model is as follows:

$$f(\omega_i, \omega_o) = \frac{DGF}{4(\omega_o \cdot \mathbf{n})(\omega_i \cdot \mathbf{n})}$$

where D, G, and F denote a normal distribution term, a geometric attenuation term, and a Fresnel term function respectively. Through the Albedo texture map, the normal map, the specular map, and the roughness map, numerical solutions of the above function terms can be calculated.

Operation 303: Acquire an absolute value of an error between the rendered image and the key frame.

Operation 304: Determine whether the absolute value of the error is less than the error threshold.

Herein, when it is determined that the absolute value of the error between the rendered image and the key frame is greater than or equal to the error threshold, operation 305 is performed. When it is determined that the absolute value of the error between the rendered image and the key frame is less than the error threshold, operation 307 is performed.

Operation 305: Calculate a gradient of the ambient illumination and the microfacet model of the panoramic image.

Operation 306: Update the ambient illumination and the microfacet model of the panoramic image by using the gradient.

During the optimization, the Albedo texture map $A_{init}$ may be first fixed, and the normal map $N_{init}$, the specular map $S_{init}$, the roughness map $R_{init}$, and the global ambient illumination $GI_{init}$ are updated at a larger learning rate $\alpha_1$. After a normal map $N_{init}$, a specular map $S_{init}$, a roughness map $R_{init}$, and global ambient illumination $GI_{init}$ that are appropriate are obtained through a certain quantity of times of iteration, the normal map $N_{init}$, the specular map $S_{init}$, the roughness map $R_{init}$, and the global ambient illumination $GI_{init}$ after the optimization are fixed, and the Albedo texture map $A_{init}$ is updated and optimized at a learning rate $\alpha_2$ less than $\alpha_1$.

Operation 307: Output model materials and ambient illumination that are optimized.

Herein, a model material group $T_{opti}$ (an Albedo texture map $A_{opti}$, a normal map $N_{opti}$, a specular map $S_{opti}$, and a roughness map $R_{opti}$) and global ambient illumination $GI_{opti}$ that are optimized are finally outputted.

2.4 Model editing

After the model materials and the global ambient illumination that are optimized are obtained, model editing may be performed according to an actual requirement. For example, ambient illumination migration, model material editing, or the like is performed on the to-be-rendered image corresponding to each key frame.

2.5 Model display

After the model editing, a corresponding rendering result may be displayed. For example, the to-be-rendered image corresponding to each key frame is inputted into an edited model, and after illumination and a material that are new are assigned to the to-be-rendered image, illumination and material information of the to-be-rendered image are re-rendered or re-illuminated, to obtain a three-dimensional target image (i.e., a three-dimensional model) of the to-be-rendered image under the illumination and the material that are new.

Referring to FIG. 14, FIG. 14 is a schematic diagram of an image rendering result according to an embodiment of the present disclosure. After the to-be-rendered image is re-illuminated, a target image under new illumination is obtained. That is, the illumination of the target image has changed compared with the to-be-rendered image.

In the above manner, after being acquired, a model material group $T_{opti}$ (an Albedo texture map $A_{opti}$, a normal map $N_{opti}$, a specular map $S_{opti}$, and a roughness map $R_{opti}$) and global ambient illumination $GI_{opti}$ that are optimized may be configured for costing down and speeding up game art asset production and creating user generated content (UCG) games (which allow players to create their own game content) content.

Taking a realistic game production pipeline as an example, in the above manner, authenticity of art modeling can be ensured, and a production cycle of art materials can be greatly shortened. For example, generally, it takes one week or even more to create high poly model and material mapping information for art. However, by use of the method provided in the present disclosure, it may be completed within one to a few hours, and a higher-quality three-dimensional model can be produced with only some post-editing. In addition, the method provided in the embodiments of the present disclosure can also provide an art designer with a first draft of the model for subsequent reference in a stylized modeling task, which also shortens the game art production cycle. In the creation of the UGC game content, a player or user may use a smartphone to shoot videos or pictures, upload the videos or pictures to the cloud to instantly acquire corresponding three-dimensional models and texture materials, and then based on a third-party tool or application (such as ARKit), quickly make the produced three-dimensional models interact with real or virtual characters, to create a variety of customized game content.

In the above manner, the embodiments of the present disclosure provide a low-cost three-dimensional object reconstruction solution, which can automatically reconstruct a three-dimensional model with a high-precision geometric shape and a high-quality PBR texture material only from a video captured by a smartphone, and can support application of a reconstruction product thereof to a variety of rendering scenes, thereby reducing a cost of art asset creation and improving development efficiency.

So far, the image rendering method according to this embodiments of the present disclosure has been described with reference to the exemplary application and implementation of the electronic device provided in the embodiments of the present disclosure. How modules in an image rendering device 555 according to an embodiment of the present disclosure cooperate to implement an image rendering solution is continuously described below.

A first processing module 5551 is configured to determine a mask, a reflection image, and a camera parameter of a to-be-rendered image. The to-be-rendered image includes a target object. A second processing module 5552 is configured to construct a model of the target object based on the mask and the camera parameter. A third processing module 5553 is configured to map the model to the reflection image, to obtain a map of the model. A fourth processing module 5554 is configured to perform illumination restoration on the model based on the map, to obtain a target image of the target object.

In some embodiments, the first processing module 5551 is further configured to determine a foreground mask and an Albedo image of the to-be-rendered image; The second processing module 5552 is further configured to construct a contour model of the target object based on the foreground mask and the camera parameter; the third processing module 5553 is further configured to perform texture mapping on the contour model based on the Albedo image, to obtain a texture map of the contour model; and the fourth processing module 5554 is further configured to perform illumination restoration on the contour model based on the texture map, to obtain the target image of the target object.

In some embodiments, the apparatus further includes: an image determination module configured to collect a video stream, the video stream including a plurality of video frames; and extract a key frame from the video stream, and take the key frame as the to-be-rendered image. The key frame includes at least one of the following video frames: a quantity of times a target feature point in a point cloud of the video frame is selected being higher than a quantity-of-times threshold, the target feature point being a feature point that is repeatedly selected and set as an inlier in the point cloud; a relative motion distance between the video frame and an adjacent previous video frame being less than a distance threshold; and a quantity of matching feature points between the video frame and the adjacent previous video frame being higher than a quantity threshold.

In some embodiments, the first processing module is further configured to perform background segmentation on the to-be-rendered image, removing a background part from the to-be-rendered image, to obtain an image area where the target object is located in the to-be-rendered image, and take the image area as the foreground mask of the to-be-rendered image; and perform intrinsic image decomposition on the to-be-rendered image to obtain the Albedo image of the to-be-rendered image.

In some embodiments, the second processing module is further configured to construct a three-dimensional spatial volume according to a center, the foreground mask, and the camera parameter of the to-be-rendered image, the three-dimensional spatial volume including a plurality of voxel points; project the voxel points of the three-dimensional spatial volume to the to-be-rendered image, and extract an initial contour model of the target object from the voxel points according to projection results; and perform contour model construction based on the initial contour model and the camera parameter, to obtain the contour model of the target object.

In some embodiments, the second processing module is further configured to filter out, from the voxel points according to the projection results, voxel points projected onto the foreground mask, and determine a plurality of volume elements including the voxel points filtered out; traverse the plurality of volume elements, and extract triangular faces from the plurality of volume elements; and combining the extracted triangular faces, to obtain the initial contour model of the target object.

In some embodiments, the second processing module is further configured to perform following multiple rounds of iterative processes based on the initial contour model and the camera parameter: perform surface subdivision on a to-be-subdivided contour model, to obtain an optimized contour model, where the to-be-subdivided contour model in the first round of iteration is the initial contour model; perform image rendering on the optimized contour model through a NeRF network based on the camera parameter, to obtain a rendered image of the optimized contour model; and acquire an absolute value of an error between the rendered image and the to-be-rendered image, enter next round of iteration when the absolute value of the error is greater than an error threshold, and stopping iteration until the absolute value of the error does not exceed the error threshold, to determine the contour model of the target object based on a corresponding optimized contour model when the iteration is stopped.

In some embodiments, the second processing module is further configured to perform triangular mesh subdivision on the to-be-subdivided contour model, to obtain the optimized contour model; or perform quadrilateral mesh subdivision on the to-be-subdivided contour model, to obtain the optimized contour model; where color errors of the triangular faces in the optimized contour model are less than a first error value, or a sum of the color errors of the triangular faces in the optimized contour model is less than a second error value; and the color errors are differences between color values of vertexes of the triangular faces projected onto the to-be-rendered image and color values at corresponding projection positions in the to-be-rendered image.

In some embodiments, the second processing module is further configured to perform surface construction on the corresponding optimized contour model when the iteration is stopped, to obtain a constructed optimized contour model, and take the constructed optimized contour model as the contour model of the target object.

In some embodiments, the contour model includes a plurality of triangular faces, and the third processing module is further configured to determine texture labels of the triangular faces according to the Albedo image and the camera parameter, and combine the triangular faces with same texture labels, to obtain a plurality of target faces; extract color areas of the target faces from the Albedo image; and perform color adjustment on the color areas of the target faces, and paste the color areas of the target faces after the adjustment into atlases of the corresponding target faces to obtain the texture map of the contour model.

In some embodiments, the fourth processing module is further configured to initialize an Albedo material group and global ambient illumination, the Albedo material group including at least the texture map; perform material and ambient illumination restoration on the contour model according to the Albedo material group, the global ambient illumination, and the camera parameter, to obtain an optimized texture map of the contour model; and determine the target image of the target object based on the optimized texture map of the contour model.

In some embodiments, the fourth processing module is further configured to determine a scene lighting source configured for re-illumination; and adjust a pixel value of the optimized texture map according to the scene lighting source, to obtain an image matching the scene lighting source, and take the obtained image matching the scene lighting source as the target image of the target object.

An embodiment of the present disclosure provides a computer program product. The computer program product includes a computer program or computer-executable instruction. The computer program or computer-executable instruction is stored in a computer-readable storage medium. A processor of an electronic device reads the computer-executable instruction from the computer-readable storage medium, and the processor executes the computer-executable instruction, to cause the electronic device to perform the image rendering method according to the embodiments of the present disclosure.

An embodiment of the present disclosure provides a computer-readable storage medium having a computer-executable instruction or computer program stored therein. When the computer-executable instruction or computer program is executed by a processor, the processor is caused to perform the image rendering method according to the embodiments of the present disclosure, such as the image rendering method shown in FIG. 3A.

In some embodiments, the computer-readable storage medium may be a memory such as a ferroelectric random access memory (FRAM), a random access memory (ROM), a programmable read-only memory (PROM), an erasable programmable read-only memory (EPROM), an electrically erasable programmable read-only memory (EEPROM), a flash memory, a magnetic surface memory, a compact disc, or a compact disc read-only memory (CD-ROM); or may be various devices including one of or any combination of the foregoing memories.

In some embodiments, the computer-executable instruction may be written in the form of a program, software, a software module, a script, or code and according to a programming language (including a compiler or interpreter language or a declarative or procedural language) in any form, and may be deployed in any form, including an independent program or a module, a component, a subroutine, or another unit suitable for use in a computing environment.

In an example, the computer-executable instruction may, but do not necessarily, correspond to a file in a file system, and may be stored in a part of a file that saves another program or other data, for example, be stored in one or more scripts in a hyper text markup language (HTML) file, stored in a file that is specially used for a program in discussion, or stored in a plurality of collaborative files (for example, be stored in files of one or more modules, subprograms, or code parts).

As an example, the computer-executable instruction may be deployed to be executed on an electronic device, or on a plurality of electronic devices located in a single location, or on a plurality of electronic devices distributed in a plurality of locations and interconnected through a communication network.

Based on the above, the embodiments of the present disclosure provide a low-cost three-dimensional object reconstruction solution, which can automatically reconstruct a three-dimensional model with a high-precision geometric shape and a high-quality PBR texture material only from a video captured by a smartphone, and can support application of a reconstruction product thereof to a variety of rendering scenes, thereby reducing a cost of art asset creation and improving development efficiency.

The foregoing descriptions are merely embodiments of the present disclosure and are not intended to limit the protection scope of the present disclosure. Any modification, equivalent replacement, or improvement made within the spirit and scope of the present disclosure fall within the protection scope of the present disclosure.

**Claims**

1. An image rendering method, performed by an electronic device, the method comprising:

    determining a mask, a reflection image, and a camera parameter of a to-be-rendered image, wherein the to-be-rendered image comprises a target object;
    constructing a model of the target object using the mask and the camera parameter;
    mapping the model to the reflection image, to obtain a map of the model; and
    performing illumination restoration on the model using the map, to obtain a target image of the target object.

2. The method of claim 1, wherein determining the mask and the reflection image of the to-be-rendered image comprises:

    determining a foreground mask and an Albedo image of the to-be-rendered image;
wherein constructing the model of the target object using the mask and the camera parameter comprises:

    constructing a contour model of the target object using the foreground mask and the camera parameter;
    wherein mapping the model based on the reflection image, to obtain the map of the model comprises:

        performing texture mapping on the contour model using the Albedo image, to obtain a texture map of the contour model; and
        wherein performing illumination restoration on the model using the map, to obtain the target image of the target object comprises:
        performing illumination restoration on the contour model using the texture map, to obtain the target image of the target object.

3. The method of claim 1, wherein before the determining the mask of the to-be-rendered image, the method further comprises:

    collecting a video stream, wherein the video stream comprises a plurality of video frames; and
    extracting a key frame from the video stream, and taking the key frame as the to-be-rendered image;
    wherein the key frame comprises at least one of the following video frames:

        a video frame whose point cloud has a number of points selected as target feature points higher than a quantity-of-times threshold, wherein each of the target feature points is a feature point that is repeatedly selected as an inlier in the point cloud;
        a video frame whose relative motion distance with an adjacent previous video frame being less than a distance threshold; or
        a video frame that has a quantity of matching feature points with the adjacent previous video frame higher than a quantity threshold.

4. The method of claim 2, wherein determining the foreground mask and the Albedo image of the to-be-rendered image comprises:

    performing background segmentation on the to-be-rendered image, removing a background part from the to-be-rendered image, to obtain an image area where the target object is located in the to-be-rendered image, and taking the image area as the foreground mask of the to-be-rendered image; and

performing intrinsic image decomposition on the to-be-rendered image to obtain the Albedo image of the to-be-rendered image.

5. The method of claim 2, wherein constructing the contour model of the target object using the foreground mask and the camera parameter comprises:

constructing a three-dimensional spatial volume using a center, the foreground mask, and the camera parameter of the to-be-rendered image, wherein the three-dimensional spatial volume comprises a plurality of voxel points;

projecting the voxel points of the three-dimensional spatial volume to the to-be-rendered image, and extracting an initial contour model of the target object from the voxel points according to projection results; and

performing contour construction using the initial contour model and the camera parameter, to obtain the contour model of the target object.

6. The method of claim 5, wherein extracting the initial contour model of the target object from the voxel points according to projection results comprises:

filtering out, from the voxel points according to the projection results, voxel points projected onto the foreground mask, and determining a plurality of volume elements comprising the voxel points filtered out;

traversing the plurality of volume elements, and extracting triangular faces from the plurality of volume elements; and

combining the extracted triangular faces, to obtain the initial contour model of the target object.

7. The method of claim 5, wherein performing contour construction using the initial contour model and the camera parameter, to obtain the contour model of the target object comprises:

performing following multiple rounds of iterative processes using the initial contour model and the camera parameter:

performing surface subdivision on a to-be-subdivided contour model, to obtain an optimized contour model, wherein the to-be-subdivided contour model in the first round of iteration is the initial contour model;

performing image rendering on the optimized contour model through a neural radiance field (NeRF) network using the camera parameter, to obtain a rendered image of the optimized contour model; and

acquiring an absolute value of an error between the rendered image and the to-be-rendered image, entering next round of iteration when the absolute value of the error is greater than an error threshold, and stopping iteration until the absolute value of the error does not exceed the error threshold, to determine the contour model of the target object using a corresponding optimized contour model when the iteration is stopped.

8. The method of claim 7, wherein performing surface subdivision on the to-be-subdivided contour model, to obtain the optimized contour model comprises:

performing triangular mesh subdivision on the to-be-subdivided contour model, to obtain the optimized contour model; or performing quadrilateral mesh subdivision on the to-be-subdivided contour model, to obtain the optimized contour model;

wherein color errors of the triangular faces in the optimized contour model are less than a first error value, or a sum of color errors of the triangular faces in the optimized contour model is less than a second error value; and

wherein the color errors are differences between color values of vertexes of the triangular faces projected onto the to-be-rendered image and color values at corresponding projection positions in the to-be-rendered image.

9. The method of claim 7, wherein determining the contour model of the target object using the corresponding optimized contour model when the iteration is stopped comprises:
performing surface construction on the corresponding optimized contour model when the iteration is stopped, to obtain a constructed optimized contour model, and taking the constructed optimized contour model as the contour model of the target object.

10. The method of claim 2, wherein the contour model comprises a plurality of triangular faces, and wherein performing texture mapping on the contour model using the Albedo image, to obtain the texture map of the contour model comprises:

determining texture labels of the triangular faces using the Albedo image and the camera parameter, and combining the triangular faces with same texture labels, to obtain a plurality of target faces;

extracting color areas of the target faces from the Albedo image; and

performing color adjustment on the color areas of the target face, and pasting the adjusted color areas of the target face into atlases of the corresponding target faces to obtain the texture map of the contour model.

11. The method of claim 2, wherein performing illumination restoration on the contour model using the texture map, to obtain the target image of the target object comprises:

initializing an Albedo material group and global ambient illumination, wherein the Albedo material group comprises at least the texture map; performing material and ambient illumination restoration on the contour model using the Albedo material group, the global ambient illumination, and the camera parameter, to obtain an optimized texture map of the contour model; and determining the target image of the target object using the optimized texture map of the contour model.

12. The method of claim 2, wherein determining the target image of the target object using the optimized texture map of the contour model comprises:

determining a scene lighting source configured for re-illumination; and adjusting a pixel value of the optimized texture map using the scene lighting source, to obtain an image matching the scene lighting source, and taking the image matching the scene lighting source as the target image of the target object.

13. An image rendering apparatus, comprising:

a first processing module, configured to determine a mask, a reflection image, and a camera parameter of a to-be-rendered image, wherein the to-be-rendered image comprises a target object; a second processing module, configured to construct a model of the target object using the mask and the camera parameter; a third processing module, configured to map the model to the reflection image, to obtain a map of the model; and a fourth processing module, configured to perform illumination restoration on the model using the map, to obtain a target image of the target object.

14. An electronic device, comprising:

a memory configured to store a computer-executable instruction or computer program; and a processor configured to perform, when executing the computer-executable instruction or computer program stored in the memory, the image rendering method of any one of claims 1 to 12.

15. A computer-readable storage medium having stored therein a computer-executable instruction or computer program that, when executed by a processor, causes the processor to perform the image rendering method of any one of claims 1 to 12.

16. A computer program product, comprising a computer program or computer-executable instruction, when the computer program or computer-executable instruction is executed by a processor, the image rendering method of any one of claims 1 to 12 being implemented.

100

Server
200

Network 300

Client

400-1

Client

400-2

FIG. 1

Electronic device 500

Memory 550

Operating system 551

Network communication module 552

Image rendering apparatus 555

First processing module 5551

Second processing module 5552

Third processing module 5553

Fourth processing module 5554

Network interface 520

Processor 510

540

User interface 530

FIG. 2

A server determines a mask, a reflection image, and a camera parameter of a to-be-rendered image ~ 101A

↓

Construct a model of the target object based on the mask and the camera parameter ~ 102A

↓

Perform texture mapping on the contour model based on the Albedo image, to obtain a texture map of the contour model ~ 103A

↓

Perform illumination restoration on the model based on the map, to obtain the target image of the target object ~ 104A

FIG. 3A

The server determines a foreground mask, a Albedo image, and the camera parameter of the to-be-rendered image ~ 101B

↓

Construct a contour model of the target object based on the foreground mask and the camera parameter ~ 102B

↓

Perform texture mapping on the contour model based on the Albedo image, to obtain a texture map of the contour model ~ 103B

↓

Perform illumination restoration on the contour model based on the texture map, to obtain the target image of the target object ~ 104B

FIG. 3B

Construct a contour model of the target object based on the foreground mask and the camera parameter — 102B

Construct a three-dimensional spatial volume according to a center, the foreground mask, and the camera parameter of the to-be-rendered image — 1021

Project the voxel points of the three-dimensional spatial volume to the to-be-rendered image, and extract an initial contour model of the target object from the voxel points according to projection results — 1022

Perform contour model construction based on the initial contour model and the camera parameter, to obtain a contour model finally required for the target object — 1023

## FIG. 4A

Extract an initial contour model of the target object from the voxel points according to projection results — 1022

Filter out, from the voxel points according to the projection results, voxel points projected onto the foreground mask, and determine a plurality of volume elements including the voxel points filtered out — 10221

Traverse the plurality of volume elements, and extract triangular faces from the plurality of volume elements — 10222

Combine the extracted triangular faces, to obtain the initial contour model of the target object — 10223

## FIG. 4B

2. Project

3. Projection result

```
Foreground
mask
```

```
To-be-
rendered
image
```

1. Construct

```
Three-
dimensional
spatial
volume
```

4.
Extract

```
Initial
white
model
```

5.
Iterate

```
White
model
```

```
Camera
parameter
```

## FIG. 4C

Input {
To-be-rendered image

White model

Camera parameter
}

→

```
Texture
mapping
```

→

Albedo texture map

Texture coordinate
} Output

## FIG. 5A

Perform texture mapping on the contour model based on the Albedo image, to obtain a texture map of the contour model — 103B

Determine texture labels of the triangular faces according to the Albedo image and the camera parameter, and combine the triangular faces with same texture labels, to obtain a plurality of target faces — 1031

↓

Extract color areas of the target faces from the Albedo image — 1032

↓

Perform color adjustment on the color areas of the target faces, and paste the color areas of the target faces after the adjustment into atlases of the corresponding target faces to obtain the texture map of the contour model — 1033

## FIG. 5B

FIG. 5C

Perform illumination restoration on the contour model based on the texture map, to obtain the target image of the target object

~104B

Initialize a Albedo material group and global ambient illumination, where the Albedo material group includes at least the texture map ~1041

Perform material and ambient illumination restoration on the contour model according to the Albedo material group, the global ambient illumination, and the camera parameter, to obtain an optimized texture map of the contour model ~1042

Determine the target image of the target object based on the optimized texture map of the contour model ~1043

FIG. 6

FIG. 7

FIG. 8

| Visual hull carving | Mesh subdivision | Neural rendering | Residual calculation |

Feedforward & gradient feedback

FIG. 9

Start

201: Perform surface subdivision on a to-be-subdivided model, to obtain an optimized model

202: Perform image rendering on the optimized model through a NeRF based on the camera parameter, to obtain a rendered image

203: Acquire an absolute value of an error between the rendered image and the key frame

204: Determine whether the absolute value of the error is less than the error threshold

No

205: Calculate a gradient of vertex coordinates of the optimized model and a NeRF parameter

206: Update the vertex coordinates of the optimized model and the NeRF parameter by using the gradient

Yes

207: Output the optimized model

End

FIG. 10

Albedo
image

sRGB

Key frame
(to-be-rendered
image)

Neural
network

Shading
image

FIG. 11

$T_{init}$

$GI_{init}$

$T_{opti}$

$GI_{opti}$

Fitting of PBR material and ambient illumination

FIG. 12

Start

301: Initialize model materials and ambient illumination

302: Perform image rendering on a white model by using ambient illumination and a microfacet model of a panoramic image, to obtain a rendered image

303: Acquire an absolute value of an error between the rendered image and the key frame

304: Determine whether the absolute value of the error is less than the error threshold

No → 305: Calculate a gradient of the ambient illumination and the microfacet model of the panoramic image

306: Update the ambient illumination and the microfacet model of the panoramic image by using the gradient

Yes

307: Output model materials and ambient illumination that are optimized

End

FIG. 13

Before processing           After processing

FIG. 14

## INTERNATIONAL SEARCH REPORT

| International application No. |
| --- |
| **PCT/CN2024/082808** |

| A. | CLASSIFICATION OF SUBJECT MATTER |
| --- | --- |

G06T15/04(2011.01)i

According to International Patent Classification (IPC) or to both national classification and IPC

| B. | FIELDS SEARCHED |
| --- | --- |

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, IEEE: 图像, 渲染, 三维, 立体, 3D, 模型, 贴图, 掩膜, 反射, 反照, 相机, 摄像, 参数, 映射, 纹理, 光照, 本征分解, image, render, three dimensional, mask, texture, reflect, PBR, camera, albedo, parameter, decomposition, model, shadow

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116958379 A (TENCENT TECHNOLOGY (SHENZHEN) CO., LTD.) 27 October 2023 (2023-10-27) <br> description, paragraphs 0068-0197 | 1-16 |
| A | CN 112316420 A (NETEASE (HANGZHOU) NETWORK CO., LTD.) 05 February 2021 (2021-02-05) <br> description, paragraphs 0075-0171 | 1-16 |
| A | CN 113240622 A (TSINGHUA UNIVERSITY) 10 August 2021 (2021-08-10) <br> entire document | 1-16 |
| A | CN 115131492 A (TENCENT TECHNOLOGY (SHENZHEN) CO., LTD.) 30 September 2022 (2022-09-30) <br> entire document | 1-16 |
| A | US 2016155261 A1 (BEVELITY LLC.) 02 June 2016 (2016-06-02) <br> entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 May 2024** | **29 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082808**

| Patent document cited in search report | | | Publication date (day/month/year) | Patent family member(s) | Publication date (day/month/year) |
|---|---|---|---|---|---|
| CN | 116958379 | A | 27 October 2023 | None | |
| CN | 112316420 | A | 05 February 2021 | None | |
| CN | 113240622 | A | 10 August 2021 | None | |
| CN | 115131492 | A | 30 September 2022 | None | |
| US | 2016155261 | A1 | 02 June 2016 | None | |

Form PCT/ISA/210 (patent family annex) (July 2022)

**REFERENCES CITED IN THE DESCRIPTION**

**Patent documents cited in the description**

- CN 202310279295X